(19) Europäisches Patentamt
European Patent Office
Office européen des brevets

(11) EP 1 760 809 B1

(12) **EUROPEAN PATENT SPECIFICATION**

(45) Date of publication and mention of the grant of the patent:
**30.05.2012 Bulletin 2012/22**

(21) Application number: **05768846.7**

(22) Date of filing: **05.08.2005**

(51) Int Cl.:
***H01M 4/86*** *(2006.01)* ***H01M 4/88*** *(2006.01)*
***H01M 8/10*** *(2006.01)* ***B01J 27/22*** *(2006.01)*

(86) International application number:
**PCT/JP2005/014442**

(87) International publication number:
**WO 2006/016536 (16.02.2006 Gazette 2006/07)**

(54) **FUEL CELL**

BRENNSTOFFZELLE

PILE À COMBUSTION

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.08.2004 JP 2004231861**
**09.08.2004 JP 2004231862**

(43) Date of publication of application:
**07.03.2007 Bulletin 2007/10**

(73) Proprietor: **Kabushikikaisha Equos Research**
**Tokyo 101-0021 (JP)**

(72) Inventor: **HASEGAWA, Norifumi**
**Sapporo-shi, Hokkaido 004-0882 (JP)**

(74) Representative: **Vossius & Partner**
**Siebertstrasse 4**
**81675 München (DE)**

(56) References cited:
**WO-A-2004/040679**
**JP-A- 2003 200 052**
**JP-A- 2003 200 052**
**JP-A- 2004 022 346**
**JP-A- 2004 185 863**
**US-A1- 2004 115 516**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention relates to fuel cells. More particularly, the present invention relates to improvement of the reaction layer of a fuel cell.

The reaction layer of a fuel cell is formed between a proton exchange membrane and a backing layer and supports a catalyst for accelerating an electrochemical reaction. In the reaction layer on an air cathode side, for example, protons passing through the proton exchange membrane and electrons transferred to the air cathode are conducted up to the catalyst, thus binding oxygen and protons diffused onto the catalyst. That is, the reaction layer needs to exhibit both proton conduction and electronic conduction in order to improve the transfer loss of oxygen, protons and electrons. To this end, a mixture of poly electrolyte having catalysts supported on surfaces such as carbon particles (exhibiting electronic conduction) and Nafion (trade name, manufactured by E.I du Pont de Nemours, this applies hereafter) which exhibits ionic conduction is used in the fuel cell (see Fig. 1B).

However, if a material having ionic conduction and a material having electronic conduction are used together, it is difficult to mix them up completely uniformly. As a result, protons and electrons cannot be uniformly transferred to all catalyst particles.

To solve this disadvantage, there have been proposed a variety of mixed conductors for use as carriers designed for supporting catalysts which exhibit both ionic conduction and electronic conduction using one material (A carrier designed for supporting a catalyst will be hereinafter referred to as a "catalyst-supporting carrier").

For example, organic catalyst-supporting carriers are disclosed in JP2001-202971A, JP2001-110428A, JP2003-68321A and JP2002-536787A.

In addition, inorganic catalyst-supporting carriers conducting electrons and oxygen ions are disclosed in JP1998-255832A, JP1999-335165A, JP2000-251533A, and JP2000-18811A.

Since the organic catalyst-supporting carriers are made of organic materials, they have many problems in terms of durability and heat resistance to be solved before being put to practical use.

US-2004/115516 A1 discloses a fuel cell with a reaction layer supporting a catalyst. The reaction layer is made of carbon particles and a liquid or solid acid.

As for the inorganic catalyst-supporting carriers which transfer electrons and oxygen ions, operating temperatures thereof are high (about 800°C). Due to this, it is considered that these inorganic catalyst-supporting carriers may be inappropriate for small-sized fuel cells suitably used in, for example, vehicles and cellular phones.

No catalyst-supporting carrier exhibiting both proton conduction and electronic conduction has yet been proposed which operates from an ordinary to moderate temperature range (room temperature to 200°C) that can be used in fuel cells.

After exerting utmost efforts in study to solve these disadvantages, the inventor of the present invention discovered a novel inorganic catalyst-supporting carrier. In addition, the inventor obtained a metal-supporting catalyst that supports a catalyst from this catalyst-supporting carrier. The present invention additionally provides a fuel cell reaction layer employing the metal-supporting catalyst as well as a fuel cell that incorporates such a reaction layer.

That is, the inventor of the present invention proposes a fuel cell comprising a reaction layer substantially composed of a catalyst-supporting carrier that is formed of a compound of an electron conductor made of an inorganic material and a proton conductor made of an inorganic material and is caused to support a catalyst.

Being a compound, this catalyst-supporting carrier as a whole is capable of electron conduction and proton conduction while the electron conductor and the proton conductor thereof are strongly bonded together so as not to dissolve in water. Preferably, the electron conductor is obtained by carbonizing an organic material.

A metal-supporting catalyst is formed by causing the catalyst-supporting carrier to support a catalyst, such as platinum or a platinum alloy, suitable for a fuel cell reaction. The term "a metal-supporting catalyst" as used herein refers to any suitable catalyst supported on the above-described catalyst-supporting carrier. In particular, if a metal-supporting catalyst that supports platinum or other catalyst suitable for a fuel cell reaction is used, as shown in Fig. 1A, electrons, protons, and oxygen are supplied to all the catalysts supported on the carrier surfaces. This permits full utilization of all the catalysts. If such a metal-supporting catalyst is used to construct a reaction layer for a fuel cell, the utilization efficiency of the catalyst and thus that of the fuel cell are improved.

Conversely, in a conventional fuel cell reaction layer of a type currently in practical use that employs both a metal-supporting catalyst composed of an electron conductive carrier (such as carbon particles) that supports a catalyst and an ion exchange resin (such as Nation),as shown in Fig. 1B, the ion exchange resin may be prevented from coming into contact with the catalyst supported in the recesses in the electron conductive carrier. Since no proton is supplied to such a catalyst, it does not contribute to a fuel cell reaction. Gas travels in an ion exchange resin at a speed far lower than in a gas phase. Accordingly, an excessive coating of an ion exchange resin blocks gas supply and thus adversely affects the performance of the fuel cell. Furthermore, ion exchange resins experience dimensional change during a drying-wetting cycle. This change in dimensions may cause some catalysts to fall off the carrier.

As the electron conductor made of an inorganic material, an electron conductor of such a type as to cause a main chain to have one of or both of a carbon-carbon double bond and a carbon-carbon triple bond, the main chain contributing to

an electronic conduction function as shown in Figs. 2 and 3 may be used or such a type as to transfer electrons through a side chain will suffice.

It is also preferable that such an electron conductor uses an inorganic material obtained by carbonizing an organic compound having a $\pi$ bond. Examples of the organic compound having a $\pi$ bond include aliphatic hydrocarbon, aromatic hydrocarbon and derivatives of thereof. At least one of them is used for the organic compound having the $\pi$ bond. Typical examples of the organic compounds include polyacetylene, resorcinol, phenol, phenylphenol, polyaniline, polypyrrole, polythiophene, phenylphosphonic acid, phenylsilane alkoxide, pyrogallol, and dihydroxybiphenyl.

Further, the inorganic material for the electron conductor can be a carbonaceous material such as graphite or a carbon nanotube or a metallic material containing a metal such as gol d, palladium, platinum, magnesium, lithium or titanium, or an alloy thereof.

As the proton conductor made of an inorganic material, one of a phosphorus-containing compound, a sulfur-containing compound, carbonic acid, boric acid, and inorganic solid-state acid, particularly at least one of a phosphorus-containing compound, phosphoric acid, phosphoric ester, sulfuric acid, sulfuric ester, sulfuric acid, tungsten oxide hydroxide, rhenium oxide hydroxide, silicon oxide, tin oxide, zirconia oxide, tungstophosphoric acid, and tungstosilicic acid can be used.

According to the present invention, these inorganic electron conductors and these inorganic proton conductors form a compound in which the electron conductors and the proton conductors are strongly bonded together. As a result, when the catalyst-supporting carrier of the present invention is immersed in water, hardly any proton conductors are desorbed. Additionally, the mixed conductor, as a whole, is capable of electron conduction and proton conduction.

The foregoing compound may be formed (i.e., the electron conductor may be fixed to the proton conductor) by a covalent bond, intercalation or inclusion. However, depending on production process conditions, these manners of fixing may possibly be mixed.

Further, whether the state of fixing is by covalent bond, intercalation or inclusion is determined according to the types of the materials of the electron conductor and the proton conductor. For example, if the electron conductor is made of an inorganic material obtained by carbonizing an organic material, the fixing may be made mainly by a covalent bond. If the electron conductor is made of a metal material and an inorganic material, particularly an oxide, is selected as a material for the proton conductor, for example, the both conductors can be fixed to each other by a covalent bond or inclusion.

The state in which the electron conductors and the proton conductors are fixed to each other by a covalent bond is illustrated in Figs. 2 and 3. Since the electron conductors 1 or 3 and the proton conductors 2 bound by a covalent bond are arranged in close proximity, both the electron conductors and the proton conductors can contact with a catalyst particle (e.g., platinum) in nano order as shown therein. Accordingly, it is possible to supply electrons and protons necessary for a catalytic reaction to the catalyst in proper quantities.

Such a catalyst-supporting carrier is formed as follows.

First, a high molecular precursor is formed by polymerizing an organic compound having a bond with a proton conducting material. In this high polymer precursor, it is considered that carbons mainly constituting the organic compound are polymerized with one another to form an electron conducting main chain having a $\pi$ bond and also form a covalent bond with the proton conductor, and that this proton conductor bridges the carbon main chain of the electron conductor. By fixing the proton conductor in sufficient quantities, the distance between the proton conductors bound to the carbon main chain by covalent bonds is narrowed, and proton conduction is generated between the proton conductors.

Alternatively, a precursor obtained by dispersing a proton conductor into a polymer of an organic compound having a $\pi$ bond may be prepared.

In a case where degree of polymerization is low, it results in a precursor in which a proton conductor is dispersed in a polymerized organic compound. In a case where degree of polymerization is not sufficient, it results in a precursor in which both a proton conductor covalent bonding to an organic compound forming an electronic conductor and a proton conductor, isolated from the former proton conductor, being substantially dispersed, are present.

This precursor is pyrolyzed under an inert atmosphere. As a result, the organic compound is carbonized into an inorganic material, thereby ensuring electronic conduction.

In addition, the proton conductor is stably fixed to the electron conducting carbon skeletons. As a result, proton conduction is ensured. It is considered that the proton conduction is attained by arranging proton conductor allocation materials to be proximate to each other. As shown in Figs. 1 and 2, if the proton conductors bridge the carbon skeletons, the positions of the proton conductors are fixed, thereby ensuring the proton conduction by the interaction between the proton conductors.

If the proton conductors are released from the carbon skeletons or if the proton conductors are not bound to the carbon skeletons from the state of the precursor, then it is considered that the proton conductors are intercalated into the carbon main chain or included in a mesh structure formed by the carbon main chain. In any case, it is considered that the proton conduction can be ensured as long as the proton conductors are in proximity.

As can be seen, since the proton conductors are integrated into a compound and are bound, intercalated or included between the carbon skeletons, the proton conductor does not float. Due to this, even if the mixed conductor is used at

a location where water is present, the proton conductor does not flow out by the water. The compound as a whole is capable of electron conduction and proton conduction. That is, a rate of lowering the proton conduction by water is very low.

Preferably, the precursor is heated or pressure-heated prior to the burning step.

Such heating or pressure-heating of the precursor will result in an increased phosphorus content after the burning step. The method employed for heating or pressure-heating the precursor is not limited to any specific one. Rather, any commonly employed method may be utilized.

As the precursor is heated while in a boil, steam generated from the heating is liquefied by cooling and returned to the reaction vessel. Refluxing is employed during the manufacture because the cooler is preferably installed in association with the reaction vessel. Such refluxing permits the atmosphere used with the precursor to be heated without any pressurization. Specific heating temperature and duration are selected to suit the characteristics of the precursor.

The method employed for pressure-heating the precursor is not limited to any specific one. However, utilizing an autoclave is preferred from the standpoint of workability and other related factors. Specific pressure of the atmosphere applied to the precursor and the atmospheric temperature are selected to suit the characteristics of the precursor.

Now, examples of the organic compound having a $\pi$ bond include unsaturated aliphatic hydrocarbon and aromatic hydrocarbon. More concretely, at least one of polyacetylene, resorcinol, phenol, phenylphenol, polyaniline, polypyrrole, polythiophene, phenylphosphonic acid, phenylsilane alkoxide, pyrogallol, and dihydroxybiphenyl can be selected as a material for the organic compound having a $\pi$ bond.

Further, examples of the proton conducting material include a phosphorus-containing compound, a sulfur-containing compound, carbonic acid, boric acid, and inorganic solid-state acid. Examples of the phosphorus-containing compound include phosphoric acid and principle examples of the sulfur-containing compound include sulfuric acid and sulfonic acid. Further, an inorganic proton conducting material can be produced using a derivative of one of these compounds as a starting material. In this case, particularly at least one of a phosphorus-containing compound, phosphoric acid, ester phosphate, sulfuric acid, ester sulfate, sulfuric acid, tungsten oxide hydroxide, rhenium oxide hydroxide, silicon oxide, tin oxide, zirconia oxide, tungstophosphoric acid, and tungstosilicic acid can be used.

To mineralize the organic compound in the precursor, it is preferable that the precursor is burned under an inert atmosphere.

The inert atmosphere can be attained by putting the precursor under the distribution of argon gas, nitrogen gas, or helium gas or in vacuum.

If the precursor is pyrolyzed under such an inert atmosphere, the organic component of the precursor is carbonized into an inorganic material. If the main chain of the organic component has a $\pi$ bond, high electron conduction is ensured. Heating temperature and heating time are appropriately selected according to the characteristics of the precursor.

Simultaneously with or after heating, a high energy other than heat can be applied to the precursor. Examples of the high energy include plasma radiation, microwave radiation and ultrasonic radiation.

As described above, the catalyst-supporting carrier according to the present invention is made of inorganic materials and exhibit both an electron conducting function and a proton conducting function. In addition, even in a low temperature range close to a room temperature, the catalyst-supporting carrier functions properly. Further, even if water is present, the catalyst-supporting carrier exhibits both electron conduction and proton conduction.

Such a catalyst-supporting carrier is capable of supporting a metal (especially a precious metal) with a catalytic action. The method for causing the carrier to support a metal is not limited to any specific one; any of known methods may be used for the purpose of the present invention.

In this way, a mixed conductor is used as a carrier for supporting a metal to provide a metal-supporting catalyst, which is in turn used to form a reaction layer and further a fuel cell unit. For example, the metal-supporting catalyst is dispersed in water, alcohol, or any other appropriate medium to prepare a paste with these mixed therein. This paste is applied onto one side of the backing layer to form a reaction layer. Furthermore, such a reaction layer and a backing layer to which the reaction layer is applied may be joined to each side of a proton exchange membrane (a Nafion membrane in this case) so as to manufacture a fuel cell unit or unit cell that constitutes a fuel cell. It is also possible to form a reaction layer by applying the paste to the backing layer side. PTFE, Nafion, and other suitable material may be added as a binder to the paste.

Also, such a metal-supporting catalyst in the form of power is hot pressed into a reaction layer that conforms to the intended shape of the electrode. Such reaction layers and a proton exchange membrane are laminated and hot pressed to an integrally molded article in which the proton exchange membrane is interposed between the reaction layers. In addition, a backing layer may be joined to the outside surface of each reaction layer to fabricate a fuel cell unit.

The following is disclosed herein:

(1) A metal-supporting catalyst comprising a carrier that is formed of a compound of an electron conductor made of an inorganic material and a proton conductor made of an inorganic material and is caused to support a noble metal catalyst.

(2) The metal-supporting catalyst according to Item (1), wherein said electron conductor is obtained by carbonizing

at least one selected from a group consisting of aliphatic hydrocarbons, aromatic hydrocarbons and derivatives of the aliphatic hydrocarbons and the aromatic hydrocarbons.
(3) The metal-supporting catalyst according to Item (2), wherein each of said aliphatic hydrocarbons, aromatic hydrocarbons and derivatives of the aliphatic hydrocarbons and the aromatic hydrocarbons contain at least one selected from a group consisting of polyacetylene, resorcinol, phenol, phenylphenol, polyaniline, polypyrrole, polythiophene, phenylphosphonic acid, phenylsilane alkoxide, pyrogallol, and dihydroxybiphenyl.
(4) The metal-supporting catalyst according to Item (1), wherein said electron conductor is made of a carbonaceous material.
(5) The metal-supporting catalyst according to Item (1), wherein said proton conductor contains at least one selected from a group consisting of a phosphorus-containing compound, a sulfur-containing compound, carboxylic acid, boric acid, and inorganic solid-state acid.
(6) The metal-supporting catalyst according to Item (1), wherein said electron conductor has consecutive carbon-carbon bonds including a carbon-carbon double bond.
(7) A metal-supporting catalyst wherein a carrier supports a noble metal catalyst, the carrier comprising an electron conductor made of an inorganic material obtained by carbonizing an organic material and an inorganic proton conductor fixed to the electron conductor.
(8) The metal-supporting catalyst according to Item (7), wherein the electron conductor is fixed to the proton conductor by a covalent bond.
(9) The metal-supporting catalyst according to Item (7), wherein the electron conductor is fixed to the proton conductor by intercalation.
(10) The metal-supporting catalyst according to Item (7), wherein the electron conductor is fixed to the proton conductor by inclusion.
(11) A method for producing a metal-supporting catalyst comprising:

a first step of obtaining a high molecular precursor by mixing and polymerizing at least one selected from a group consisting of aliphatic hydrocarbons, aromatic hydrocarbons and derivatives of the aliphatic hydrocarbons and the aromatic hydrocarbons with a proton conducting material;
a second step of burning the high molecular precursor obtained in the first step;
a third step of causing the burned product obtained in the second step to support a noble metal catalyst.

(12) A method for producing a metal supporting catalyst comprising:

a first step of obtaining a high molecular precursor by polymerizing at least one selected from a group consisting of aliphatic hydrocarbons, aromatic hydrocarbons and derivatives of the aliphatic hydrocarbons and the aromatic hydrocarbons, and mixing a proton conducting material into said at least one upon polymerization thereof;
a second step of burning the precursor obtained in the first step;
a third step of causing the burned product obtained in the second step to support a noble metal catalyst.

(13) The method according to Items (11) or (12), wherein each of said at least one selected from a group consisting of aliphatic hydrocarbons, aromatic hydrocarbons and derivatives of the aliphatic hydrocarbons and the aromatic hydrocarbons is at least one selected from a group consisting of polyacetylene, resorcinol, phenol, phenylphenol, polyaniline, polypyrrole, polythiophene, phenylphosphonic acid, phenylsilane alkoxide, pyrogallol, and dihydroxybiphenyl.
(14) The method according to Item (11) or (12), wherein said proton conductor contains at least one selected from a group consisting of a phosphorus-containing compound, a sulfur-containing compound, carboxylic acid, boric acid, and inorganic solid-state acid.
(15) The method according to claim (11) or (12), wherein the first step comprises heating the high molecular precursor or heating the high molecular precursor under a pressurized condition.

The invention is further described with reference to the drawings:

Fig. 1A is a schematic view of a catalyst-supporting carrier of the present invention, showing the manner in which the carrier supports a catalyst; Fig. 1B shows the manner in which a conventional catalyst-supporting carrier supports a catalyst;
Fig. 2 is a typical view illustrating the structure of a catalyst-supporting carrier according to the present invention;
Fig. 3 is a typical view illustrating the structure of a catalyst-supporting carrier according to the present invention;
Fig. 4 is a typical view illustrating the structure of a precursor;
Fig. 5 is a typical view illustrating the structure of a catalyst-supporting carrier of an embodiment according to the

present invention;

Fig. 6 is a typical view of a holder for checking the proton conducting function of the catalyst-supporting carrier in the embodiment;

Fig. 5 is a chart showing the current-voltage characteristics of the holder shown in Fig. 6;

Fig. 8 is a chart showing the change of a phosphoric acid remaining rate with time in the catalyst-supporting carrier of the embodiment in pure water;

Fig. 9 is a cross-sectional view of a fuel cell with a reaction layer (on the air cathode side) composed of a metal-supporting catalyst according to one embodiment of the invention;

Fig. 10 is a cross-sectional view of an apparatus for measuring the characteristics of the fuel cell shown in Fig. 9;

Fig. 11 is a chart comparing the characteristics of the fuel cells with reaction layers made of metal-supporting catalysts according to certain embodiments of the invention with those of a fuel cell with a reaction layer made of a metal-supporting catalyst without proton conductivity;

Fig. 12 shows the structure of a reflux condenser used in another embodiment;

Fig. 13 shows the structure of an autoclave used in another embodiment;

Fig. 14 shows the relationship between the proton conductivity and the phosphorus amount in the mixed conductor of respective embodiments; and

Fig. 15 shows the structure of a fuel cell in another embodiment.

The above-stated advantages of the metal-supporting catalyst for use in a fuel cell according to the present invention will be confirmed hereinafter by way of exemplary embodiments.

First, a method for producing a metal-supporting catalyst will be described with reference to the following chemical formula 1 as well as Figs. 3 and 4.

Chemical formula 1

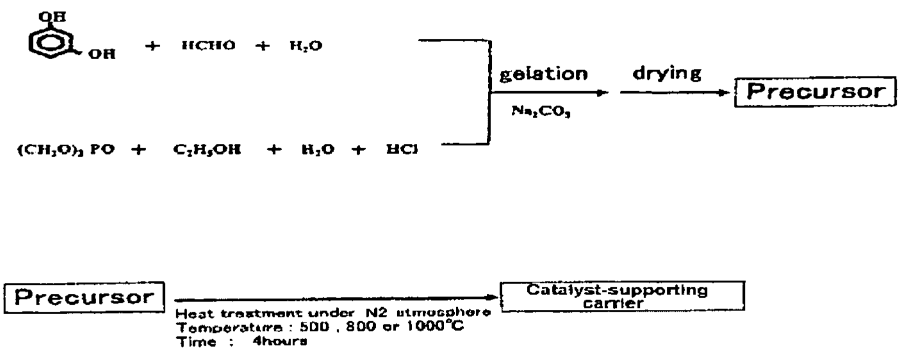


Resorcinol (10 g) and formaldehyde (13 ml) are dissolved in water (40 ml), and a solution obtained by hydrolyzing trimethyl phosphate is added to the solution. The resultant solution is dehydrated and condensed with $Na_2CO_3$ as a catalyst to gelate the solution. This gel is dried at 120°C, thereby obtaining a precursor (see Fig.4).

This precursor is subjected to a pyrolysis (at 500 to 1000 °C) under a nitrogen atmosphere to obtain a catalyst-supporting carrier of Embodiments 1-3. This catalyst-supporting carrier is constituted so tha t electronic conductor phases 7 of a graphite-like structure and proton conductor phase 9 containing phosphoric acid group are alternately aligned as shown in Fig. 5.

The catalyst-supporting carrier thus obtained is ground, pressure-formed into a plate, and put between current collecting plates to supply a DC current to the plate-formed mixed conductor. Specific resistance of each embodiment is obtained from a voltage at that time. Measurement temperature is a room temperature.

| | Embodiment 1 | Embodiment 2 | Embodiment 3 |
|---|---|---|---|
| Heat treatment temperature | 500°C | 800°C | 1000°C |
| Specific resistance (Ω·cm) | 138 | 0.35 | 0.13 |

In the embodiments, the reason of high specific resistance at a heating temperature of 500°C is considered to be insufficient carbonization of an organic material.

The heating temperature and heating time are parameters that can be appropriately selected according to the structure and the like of the organic compound.

The specific resistance was determined as follows:

$$1/\text{specific resistance} = \text{conductivity} = 1/(\text{resistance} \times \text{geometrical surface area of sample/thickness}),$$

in which resistance = applied voltage/response current.
The proton conductivity and the electron conductivity (described below) are calculated in the same manner. To calculate the proton conductivity, a sample is sandwiched between a material, such as a Nafion membrance, that conducts protons but not electrons. Whereas, to calculate the electron conductivity, a sample is sandwiched between a material, such as copper, that conducts electrons but not protons.

Next, a proton conduction test will be described with reference to Figs. 6 and 7.
As shown in Fig. 6, a backing layer 17 consisting of a carbon cloth and catalyst layer 15 is attached to each side of a sample 11 in each of Embodiments 1 to 3. In the figure, the catalyst layer 15 is composed of carbon particles supporting a platinum catalyst and is equivalent to the structure of the reaction layer of a prior-art fuel cell. A Nafion membrane 13 transmits protons but blocks electrons.
A holder shown in Fig. 6 is put in a container, and nitrogen gas or hydrogen gas at a temperature of 60°C and a relative humidity of 100% is introduced into the container. A voltage-current characteristic at that time is shown in Fig. 7.

As can be seen from Fig. 7, even if a voltage is supplied between the backing layers 17 while introducing the nitrogen gas, no current is carried. On the other hand, if hydrogen gas is introduced into the container, it can be seen that a current flows. This demonstrates that [the] sample 11 has proton conduction.
Further, the proton conductivity of each sample is calculated as follows.

| | Embodiment 1 | Embodiment 2 | Embodiment 3 |
|---|---|---|---|
| Heat treatment temperature | 500°C | 800°C | 1000°C |
| Proton conductivity (S/cm) | $2.6\times10^{-3}$ | $1.3\times10^{-3}$ | $7.3\times10^{-4}$ |

Further, as comparative examples, the proton conductivities of samples similarly subjected to a heat treatment by the formation method in the embodiments already described above and to which trimethyl phosphate are not added are calculated as described above.

| | Comparative Example 1 | Comparative Example 2 | Comparative Example 3 |
|---|---|---|---|
| Heat treatment temperature | 500°C | 800°C | 1000°C |
| Proton conductivity (S/cm) | $1.0\times10^{-6}$ or less | $1.0\times10^{-6}$ or less | $1.0\times10^{-6}$ or less |

By comparing the samples to which trimethyl phosphate is added with those to which trimethyl phosphate is not added, the appearance of proton conduction by phosphorus is proven.

The relationship between immersion time and phosphorus remaining rate when samples (0.1 g) in the respective embodiments are immersed in 100 cc of pure water at a room temperature is shown in Fig. 8.
In Fig. 8, the phosphorus remaining rate is measured by an EDX analyzer (model designation: EMAX240, manufactured by HORIBA Ltd.).
The result shown in Fig. 8 confirms that about 60% of phosphorus, about 80% of phosphorus, and about 90% of phosphorus (i.e., proton conduction) remains in the samples in Embodiments 1, 2, and 3, respectively.
This demonstrates that the catalyst-supporting carriers in the embodiments maintain their proton conducting functions even in a humid environment for a long time.
These catalyst-supporting carriers can be used for fuel cells, and particularly suitably used for the reaction layers constituting the respective fuel cells. The reaction layer is a location where oxygen or hydrogen supplied from the outside through the backing layers is ionized, and is normally arranged between the proton exchange membrane and the backing layer.

Examples of a method for producing a metal-supporting catalyst will next be described.
Each of the catalyst-supporting carriers produced above is ground to powder by a ball mill or the like, and the catalyst-supporting carriers thus ground is caused to support a platinum catalyst or other catalyst. The catalyst-supporting carrier can be made to support the platinum catalyst by the same method as that for causing a carbon carrier in a process of forming an ordinary platinum-supporting carbon to support a platinum catalyst. Exemplary methods include use of colloid or impregnation.

The colloid method was performed as follows: A Pt colloidal solution was prepared by using platinic chloride. Added to this colloidal solution was the catalyst-supporting carrier in the form of power such that the carrier would support platinum. The carrier was then subjected to a reduction treatment to obtain a carrier that supports platinum of Embodiment 4. In addition to the above, the platinum-supporting carrier of Embodiment 5 was obtained by changing the platinum concentration.
The impregnation method was performed as follows: The catalyst-supporting carrier is ground and added to a methanol solution diamino platinum nitrite, which was then mixed and dried. Subsequently, the carrier was subjected to a reduction treatment to provide a carrier supporting platinum of Embodiment 6.
The characteristics of the catalysts supporting platinum of these embodiments are as follows:

| | Embodiment 4 | Embodiment 5 | Embodiment 6 |
|---|---|---|---|
| Density of supported platinum (wt%) | 30 | 50 | 30 |
| Platinum particle size (nm) | 5.1 | 5.1 | 3 - 6 |

The foregoing densities of supported platinum were measured by an EDX analyzer (model designation: EMAX240, manufactured by HORIBA Ltd.).
The foregoing particle sizes of platinum were measured by an XRD (model designation: XPM3, manufactured by Bruker AXS Inc.).

As a next step, the fuel cell 20 shown in Fig. 9 was constructed from the platinum-supporting catalyst of Embodiment 4. In particular, the platinum supporting catalyst of Embodiment 4 was dispersed in a mixture of pure water, a PTFE fluid dispersion, and alcohol, which was then applied onto a backing layer 26 made of carbon to provide a reaction layer (air cathode) 23 of the embodiment. The amount of application was varied to prepare three different reaction layers (Embodiments 7, 8, and 9). Meanwhile, the reaction layer (the anode or counter electrode) was obtained by applying powered carbon that supported platinum (of a density of 40 wt%) dispersed in a mixture of pure water and a Nafion solution onto a carbon backing layer 27. Subsequently, the backing layer 26 (coated with the reaction layer 23), the Nafion membrane 21, and the backing layer 27 (coated with the reaction layer 24) were laminated and joined by hot pressing to obtain the fuel cell 20 of Fig. 9.
Meanwhile, in the fuel cell 20 of the Embodiment shown in Fig. 9, the materials capable of proton conduction were excluded from the reaction layer on the air cathode side in order to provide a fuel cell of Comparative Example 4. In particular, powered carbon that supported platinum (of a density of 40 wt%) was dispersed in a mixture of a PTFE fluid dispersion and alcohol, which was then applied onto a backing layer 26 made of carbon to provide a reaction layer (air cathode) of Comparative Example 4.

The fuel cells of Embodiment 7-9 and Comparative Example 4 were set in the measuring apparatus 30 shown in Fig. 10 to measure the electrochemical surface areas of the cells. The following was the method of measurement used:

First, to humidify the sample sufficiently, humidified nitrogen gas was introduced to the reaction layer 23 on the air cathode side and the reaction layer 24 on the anode side.
Second, the supply of nitrogen gas was terminated and replaced by hydrogen gas supply to electrochemically stabilize the platinum surface under the conditions of 0.1-1.0 V, 50mV/sec with respect to the reference potential of the reaction layer on the anode side.
CO gas was then introduced to the reaction layer on the air cathode side while a potential of 0.3 V was maintained with respect to the reference potential of the reaction layer on the anode side so as to allow CO to be absorbed in the platinum surface. Next, with the potential maintained as it was, nitrogen gas was introduced to the reaction layer on the air cathode side to replace the CO in the reaction layer with nitrogen gas.
The CO absorbed in the platinum surface is electrochemically removed by oxidation. The electrochemical surface area of platinum was calculated from the electrical quantity required for the removal by oxidation. The equation below was used to calculate the electrochemical surface area. The test was conducted at 50°C.
Electrochemical surface area ($cm^2$-Pt) = electrical quantity required for oxidizing CO (mC)/0.42 mC/$cm^2$-Pt.

Table 1 shows the results of the test.

Table 1
Electrochemical surface areas

| | Comparative Example 4 | Embodiment 7 | Embodiment 8 | Embodiment 9 |
|---|---|---|---|---|
| Pt surface area ($cm^2$-Pt/($cm^2$-geometic) | 274 | 133 | 174 | 210 |

(continued)

| | Electrochemical surface areas | | | |
|---|---|---|---|---|
| | Comparative Example 4 | Embodiment 7 | Embodiment 8 | Embodiment 9 |
| Pt electrochemical surface area ($cm^2$-Pt/$cm^2$-geometic) | 17 | 139 | 163 | 179 |
| Utilization efficiency of platinum (%) | 6.3 | 104.5 | 93.7 | 85 |

In Table 1, the platinum surface area of each embodiment / example was calculated from the amount of platinum on the electrodes and the platinum surface area as obtained from the catalyst particle size which was in turn measured by an XRD. The electrochemical surface area was calculated from the electrical quantity required for CO oxidization. The utilization efficiency of platinum was obtained by dividing the electrochemical surface area of platinum by the platinum surface area.

The results of Table 1 clearly show that the catalysts supporting platinum of the embodiments have an electrochemical surface area of platinum even without an ion exchange resin (such as Nafion).

The apparatus shown in Fig. 10 was used to measure the characteristics of the fuel cell of Embodiments 7-9 and Comparative Example 4 at 50°C by introducing hydrogen gas to the reaction layer on the anode side and air to the reaction layer on the air cathode side at an atmospheric pressure.

Fig. 11 shows the results of the measurement. The fuel cells that used the catalysts supporting platinum of Embodiment 7-9 as the reaction layers exhibited desired current-voltage characteristics, confirming their excellent operation as fuel cells.

In the tests stated above, the catalyst-supporting catalysts in the examples exhibit both proton conduction and electronic conduction at a low temperature in a range of a room temperature to 60°C. Depending on the presence of water, it is considered that the catalyst-supporting catalysts exhibit the equivalent functions up to 200°C under an unhumidified atmosphere.

It is seen that the metal-supporting catalysts composed of catalyst-supporting carriers supporting platinum in the embodiments can exhibit their functions as fuel cells even in an ordinary temperature range as compared with the conventional inorganic-based catalyst-supporting carrier which exhibits its functions at a high temperature of about 800°C.

Furthermore, as is obvious from the structure shown in Fig. 5, the electronic conductor phase 7 is connected to the proton conductor phase 9 by a covalent bond, so that they are quite proximate to each other. Due to this, even if a catalyst particle is very small, the electron conductor 7 and the proton conductor 9 can be always brought into contact with the catalyst particles simultaneously. This makes it possible to supply electrons and protons necessary for a catalytic reaction to the catalyst in proper quantities and thereby improve catalyst utilization efficiency and thus fuel cell utilization efficiency.

Other embodiments of catalyst-supporting carriers that can be used for the reaction layer of a fuel cell will be described hereinafter.

## Chemical Formula 2

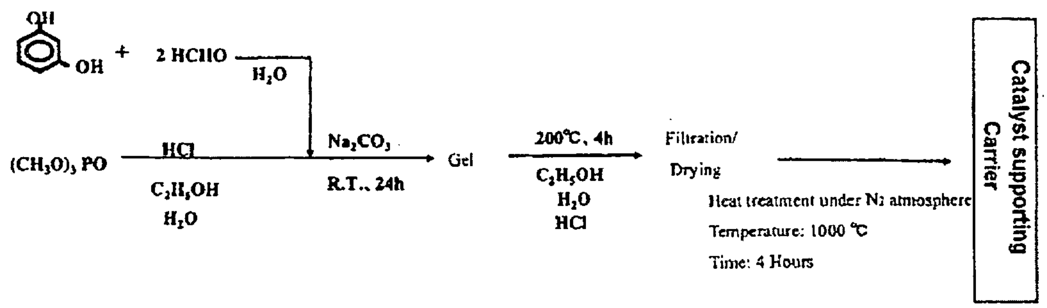


As shown in Chemical Formula 2 above, resorcinol (5 g) was dissolved in pure water (20ml) and formaldehyde (6.7 ml) was added thereto. Meanwhile, trimethyl phosphate (5.2 ml) was stirred in a mixed solution of pure water (3.2 ml), ethanol (10.5 ml), and hydrochloric acid (124 μl) for one hour to hydrolyze the trimethyl phosphate. The solution obtained by hydrolyzing trimethyl phosphate was added to the resorcinol/formaldehyde aqueous solution. After $Na_2CO_3$ (0.47 g)

was also added, the solution was left standing at a room temperature for 24 hours to gelate the solution.
The resultant gel was ground and was refluxed in a mixed solution of trimethyl phosphate (5.2 ml), pure water (3.2 ml), ethanol (10.5 ml), and hydrochloric acid (124 μl) in an oil bath at a temperature of 200°C for four hours. Fig. 12 shows the apparatus used for the reflux. The catalyst-supporting carrier of the embodiment was obtained by filtering, drying, and subjecting the resultant sample to heat-treatment under an inert atmosphere at 1000°C for four hours.
The catalyst-supporting carrier thus obtained was further ground by a ball mill and formed into disk-shaped samples having a diameter of 15 mm and a thickness of about 3 mm using an SPS sintering machine. Each sample was interposed between Nafion membranes as well as catalyst layers to form a holder shown in Figure 6. The holder was placed in a container, and nitrogen gas and hydrogen gas at a temperature of 60°C and a humidity of 100% were introduced into the container. A voltage was applied to the holder to obtain response current. A voltage-current characteristic of the catalyst-supporting carrier of Embodiment 10 was determined from the response current (similar to that shown in Fig. 7). The proton conductivity was determined from this characteristic by calculation as $5.6\times10^{-3}$S/cm. The amount of phosphorus in the sample (Pmol/Cmol) was 4.8% as determined by an EDX analyzer.

One embodiment of another catalyst-supporting carrier that can be used in the reaction layer of a fuel cell will nowbe described.

Chemical Formula 3

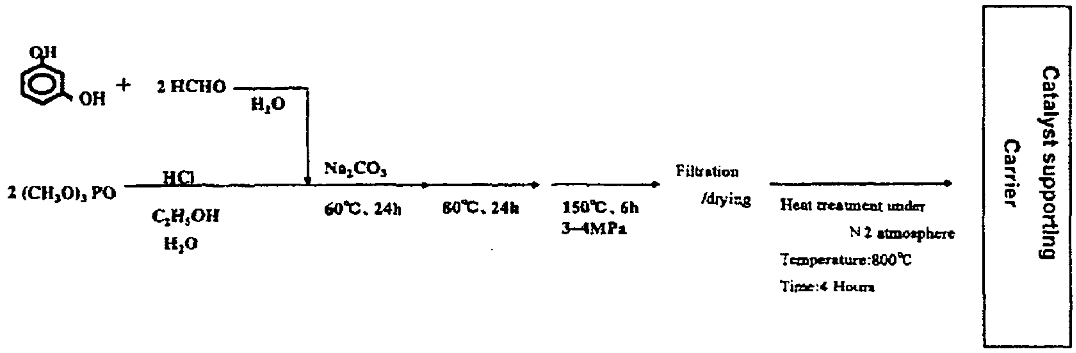


As shown in Chemical Formula 3, resorcinol (2 g) and formaldehyde (2.7ml) were dissolved in pure water (8 ml). Meanwhile, trimethyl phosphate (4.2 ml) was stirred in a mixed solution of pure water (2.6 ml), ethanol (5.0 ml), ad hydrochloric acid (99 μl) for one hour to hydrolyze the trimethyl phosphate. The second solution was added to the first solution. After $Na_2CO_3$ was also added, the solution was stirred at a room temperature for three hours, then left standing at 60°C for 24 hours, and at 80°C for 24 hours.
The sample was heated in an autoclave having an internal space of 120 cc (see Fig. 13) at 150°C for six hours. The internal pressure within the autoclave rises to about 3-4 MPa due to the self-developed pressure of the solvents.
The catalyst-supporting carrier of the embodiment was obtained by filtering, drying, and subjecting the resultant sample to heat-treatment under an inert atmosphere at 800°C for four hours.
The catalyst-supporting carrier thus obtained was further ground in a ball mill and pressure-formed into disk-shaped samples having a diameter of 15 mm and a thickness of about 3 mm using an SPS (spark plasma sintering) sintering machine. Each sample was interposed between Nafion membranes as well as catalyst layers to form a holder shown in Figure 6. The holder was placed in a container, and nitrogen gas and hydrogen gas at a temperature of 60°C and a humidity of 100% were introduced into the container. A voltage was applied to the holder to obtain response current. A voltage-current characteristic of the catalyst-supporting carrier of Embodiment 11 was determined from the response current (similar to that shown in Fig. 7). The proton conductivity was determined from this characteristic by calculation as $1.5\times10^{-2}$S / cm. The amount of phosphorus in the sample (Pmol/Cmol) was 5.8%. The phosphorus amount in this embodiment was determined in the same manner as in Embodiment 4.

Table 2 below and Fig. 14 show the relationship between the phosphorus content and the proton conductivity of each of the catalyst-supporting carriers of the foregoing embodiments.

Table 2

| | Embodiment2 | Embodiment3 | Embodiment10 | Embodiment11 |
|---|---|---|---|---|
| Pretreatment of precursors | | | 200°C | autoclave |
| Heating temp (°C) | 800 | 1000 | 1000 | 800 |
| Phoshorus content | 4.2% | 3.8% | 4.8% | 5.8% |
| Proton conductivity | $1.3*10^{-3}$ | $7.3*10^{-4}$ | $5.6*10^{-3}$ | $1.5*10^{-2}$ |

These comparisons demonstrates that heating or pressure-heating of precursors imparts an increased phosphorus content and thus improved proton conductivity to the catalyst-supporting carrier obtained upon the heat treatment.

(Embodiment 12)

Two grams of phenol was dissolved in a mixed solution of 5 cc of ethanol in 30 cc of pure water, to which 3.15 cc of a formaldehyde solution was then added. After 4.89 cc of a trimethyl phosphate solution was added to this, the solution was stirred for one hour, and then 0.089 gram of sodium carbonate was added. The solution was then stirred at a room temperature overnight. After the solution was left standing at 70°C under a sealed condition for 24 hours, the solvent was removed. The resultant sample was subjected to heat treatment at 500°C under a nitrogen gas atmosphere for 4 hours to obtain the catalyst-supporting carrier of this embodiment.

(Embodiment 13)

Two grams of pyrogallol was dissolved in 8 cc of pure water, to which 2.36 cc of a formaldehyde solution was then added. After 3.65 cc of a trimethyl phosphate solution was added to this, the solution was stirred for one hour, and then 0.0167 gram of sodium carbonate was added. The solution was then stirred at a room temperature for three hours. After the solution was left at rest at 50°C under a sealed condition for 24 hours, it was further left at rest at 80°C under a sealed condition for 72 hours. The resultant gel was subjected to heat treatment at 800°C under a nitrogen gas atmosphere for 4 hours to obtain the catalyst-supporting carrier of this embodiment.

(Embodiment 14)

Three grams of dihydroxybiphenyl was dissolved in 12 cc of a mixed solution of ethanol and water, with an ethanol/water volume ratio of 1/1, to which 4.84 cc of a formaldehyde solution was then added. After 7.49 cc of a trimethyl phosphate solution was added to this, the solution was stirred for one hour, and then 0.0683 gram of sodium carbonate was added. The solution was then stirred at a room temperature for three hours. After the solution was left at rest at 50°C under a sealed condition for 24 hours, it was further left at rest at 80°C under a sealed condition for 72 hours. Upon evaporation of the solvent, the resultant sample was subjected to heat treatment at 500°C under a nitrogen gas atmosphere for 4 hours to obtain the catalyst-supporting carrier of this embodiment.

(Embodiment 15)

Three grams of resorcinol was dissolved in 12 cc of pure water, to which 4.05 cc of a formaldehyde solution was then added. While stirring this, 0.736 cc of an aqueous phosphate solution was gradually added. After the solution was left standing at 70°C under a sealed condition for 24 hours, the solvent was removed. The resultant sample was subjected to heat treatment at 1000°C under a nitrogen gas atmosphere for 4 hours to obtain the catalyst-supporting carrier of this embodiment.

(Embodiment 16)

Three grams of resorcinol was dissolved in 12 cc of pure water, to which 4.05 cc of a formaldehyde solution was then added. Then, 0.028 gram of sodium carbonate was added. After the solution was left standing at 50°C for 24 hours and then at 80°C for 72 hours both under a sealed condition, the gel was ground. The ground gel was washed separately with a 0.1N hydrochloric acid solution, pure water, and ethanol in that order.
The washed gel is immersed in a solution of 1.5 gram of tungstophosphoric acid in 50 cc of ethanol. After being immersed at 50°C for 48 hours, the gel was subjected to heat treatment at 700°C under a nitrogen gas atmosphere for 4 hours to obtain the catalyst-supporting carrier of this embodiment.

(Embodiment 17)

Three grams of resorcinol was dissolved in 12 cc of pure water, to which 4.05 cc of a formaldehyde solution was then added. Added to this were a solution of 2.18 grams of phenylphosphonic acid in a mixture of ethanol and pure water, with an ethanol/pure water volume ratio of 1/1, and then 0.114 gram of sodium carbonate. After being stirred at a room temperature for 12 hours, the solution was left standing at 60°C for 24 hours and then at 80°C for 48 hours both under a sealed condition. The resultant sample gel was subjected to heat treatment at 800 °C under a nitrogen gas atmosphere for 4 hours to obtain the catalyst-supporting carrier of this embodiment.

After Embodiments 12-17 thus obtained were ground in a ball mill and were pressure-formed into samples having a diameter of 15 mm and a thickness of about 3 mm. To measure the electronic specific resistance of each sample, the sample was interposed between collector plates made of gold and a DC current was applied. The electronic specific resistance was obtained from the voltage in response to that application. To measure the ionic conductance of the obtained samples, each sample was interposed between Nafion membranes as well as catalyst layers to form a holder shown in Fig 6. The holder was placed in a container, and nitrogen gas or hydrogen gas at a temperature of 60°C and a humidity of 100% was introduced into the container. A voltage was applied to the holder. The ionic conductance was obtained from the response current.
The results are shown in Table 3.

Table 3

| | Electronic specific resistance (Ω·cm) | Proton conductance (S/cm) |
|---|---|---|
| Embodiment 12 | 10 | $7.1 \times 10^{-4}$ |
| Embodiment 13 | 0.18 | $1.1 \times 10^{-2}$ |
| Embodiment 14 | 50 | $5.3 \times 10^{-4}$ |
| Embodiment 15 | 0.07 | $1.0 \times 10^{-3}$ |
| Embodiment 16 | 0.14 | $1.5 \times 10^{-4}$ |
| Embodiment 17 | 0.14 | $2.7 \times 10^{-3}$ |

As in Embodiments 1-3, the stability of these Embodiments to water were confirmed by immersing 0.1 gram of each sample in pure water at a room temperature and measuring the concentration of phosphorus in the immersed sample (the tungsten concentration in Embodiment 12) over time. The concentrations of phosphorus (the tungsten concentration in Embodiment 12) substantially stabilized after 50 hours from the immersion. Even after 200 hours of immersion, with respect to the initial phosphorus concentration (the tungsten concentration in Embodiment 12), 45%, 81%, 86%, 90%, 95%, 75% of phosphorus (or tungsten) remained in the samples in Embodiments 12, 13, 14, 15, 16, and 17, respectively.

Present inventor finds that a new proton exchange membrane can be used as an element of the fuel cell shown in FIG. 9 rather than the Nafion (polymer proton exchange membrane). The new proton exchange membrane makes it possible to perform the fuel cell, especially reaction layer thereof at 100 degree C or more. According to the fuel cell, exhaust heat therefrom is used effectively. Hereinafter, a structure of the fuel cell performing at 100 degree or more is shown.

As a proton exchange membrane of the fuel cell the following material can be used, such as organic-inorganic hybridized compound including silicon alkoxide at the end thereof, inorganic-organic hybridized material including phosphate group made by phosphate compound, grass system solid electrolyte such as $P_2O_5$-$Mo_x$, a proton exchange membrane made by impregnating phosphoric acid in a porous medium of silicon carbide or a basic polymeric membrane. The reaction layer is made in a same manner shown in FIG. 9. In the manner, both the cathode and anode can be made not using ion exchange membrane.
An inorganic-organic hybridized membrane including phosphate group is formed as follows.
A bonded material of polyethylene glycol and 3-isociarate propyl triethoxysilane is used as an inorganic-organic hybridized compound, by existing phosphate compound as a source of phosphoric acid, and the inorganic-organic hybridized membrane including a phosphate group is obtainable.
The reaction layer and the backing layer are formed in a same manner shown in FIG.9.
The fuel cell can be performed at the temperature range from 100 degree C to 200 degree C.

A fuel cell of including a grass system solid proton exchange membrane as a proton exchange membrane is shown hereinafter. A metal oxide system solid proton exchange membrane (P2O5-Mox (M=Si, Ti, Zr, Al etc.) made by sol-gel method is known as the grass system solid proton exchange membrane. The grass system solid proton exchange membrane is shaped as follows. That is, the molding material of sol state is molded or cast and followed by drying.
The reaction layer and the backing layer are formed in a same manner shown in FIG.9.

The fuel cell can be performed at the temperature range from 100 degree C to 200 degree C.

FIG. 15 shows a phosphoric-acid fuel cell system in which a reactive layer of metal-supporting catalyst is applied. The phosphoric-acid fuel cell system 110 includes a fuel cell 112, separators 114a, 114b and power collecting electrodes 116a, 116b. The fuel cell 112 comprises a proton exchange membrane, reactions layers and backing layers. The separators 114a, 112b are disposed on a both side of the fuel cell 112 and made of bipolar plate. The power collecting electrodes 116a, 116b are disposed out side of the separators 114a and 114b, respectively. End-plate 118a and 118b are disposed out side of the power collecting electrodes, respectively, and the end-plates 118a and 118b are tighten each other by bolts not shown. The fuel cell 112 comprises an electrolyte matrix layer 120 of porous silicon carbide in which phosphoric acid are included, and the reaction-backing layer 124, 126 being disposed on both sides of the electrolyte matrix layer 120 by interposing a flame like spacer 122. The platinum-supporting catalyst of the Embodiment 4 is dispersed in a mixed liquid comprising of pure water, PTFE dispersion liquid and alcohol and followed by coating a carbon backing layer. Then the reaction-backing layer 124 and 126 are obtained. A first gas path 128 for flowing hydrogen gas is formed on the surface facing to the reaction-backing layer 124 on the separator 114a. To the contrary, A second gas path 130 for flowing air is formed on the surface facing to the reaction-backing layer 126 on the separator 114b. The phosphoric-acid fuel cell thus constructed can be performed at the temperature range form 100 degree C to 200 degree C of its reaction layer.

The present invention is not limited at all by the embodiments and the description of the embodiments. The present invention also contains various changes and modifications thereto without departure from the description of claims which follow in a range that can be easily attained by a person having ordinary skill in the art.

## Claims

1. A fuel cell comprising a reaction layer composed of a catalyst-supporting carrier supporting a catalyst and formed of a compound bonding an electron conductor made of an inorganic material and a proton conductor made of an inorganic material.

2. The fuel cell according to claim 1, wherein said electron conductor is obtained by carbonizing at least one selected from a group consisting of aliphatic hydrocarbons, aromatic hydrocarbons and derivatives of the aliphatic hydrocarbons and the aromatic hydrocarbons.

3. The fuel cell according to claim 2, wherein each of said aliphatic hydrocarbons, aromatic hydrocarbons and derivatives of the aliphatic hydrocarbons and the aromatic hydrocarbons contain at least one selected from a group consisting of polyacetylene, resorcinol, phenol, phenylphenol, polyaniline, polypyrrole, polythiophene, phenylphosphonic acid, phenylsilane alkoxide, pyrogallol, and dihydroxybiphenyl.

4. The fuel cell according to claim 1, wherein said electron conductor is made of a carbonaceous material.

5. The fuel cell according to claim 1, wherein said proton conductor contains at least one selected from a group consisting of a phosphorus-containing compound, a sulfur-containing compound, carboxylic acid, boric acid, and inorganic solid-state acid.

6. The fuel cell according to claim 1, wherein said electron conductor has consecutive carbon-carbon bonds including a carbon-carbon double bond.

7. The fuel cell according to any one of claims 1 to 6, wherein said catalyst-supporting carrier supports a noble metal catalyst.

8. A fuel cell wherein an electron conductor made of an inorganic material obtained by carbonizing an organic material is fixed to a proton conductor made of an inorganic material.

9. The fuel cell according to claim 8, wherein the electron conductor is fixed to the proton conductor by a covalent bond.

10. The fuel cell according to claim 8, wherein the electron conductor is fixed to the proton conductor by intercalation.

11. The fuel cell according to claim 8, wherein the electron conductor is fixed to the proton conductor by inclusion.

12. The fuel cell according to claim 5, wherein the reactive layer is performed 100 degree C~200 degree C.

13. A method for producing a reaction layer for a fuel cell comprising:

a first step of obtaining a high molecular precursor by mixing and polymerizing at least one selected from a group consisting of aliphatic hydrocarbons, aromatic hydrocarbons and derivatives of the aliphatic hydrocarbons and the aromatic hydrocarbons with a proton conducting material;
a second step of burning the high molecular precursor obtained in the first step;
a third step of causing the burned product obtained in the second step to support a catalyst and joining the burned product to a proton exchange layer.

14. A method for producing a reaction layer for a fuel cell comprising:

a first step of obtaining a high molecular precursor by polymerizing at least one selected from a group consisting of aliphatic hydrocarbons, aromatic hydrocarbons and derivatives of the aliphatic hydrocarbons and the aromatic hydrocarbons, and mixing a proton conducting material into said at least one upon polymerization thereof;
a second step of burning the precursor obtained in the first step;
a third step of causing the burned product obtained in the second step to support a catalyst and joining the burned product to a proton exchange layer.

15. A method of producing a reaction layer for a fuel cell comprising the steps of
binding or mixing an organic compound with a compound having movable protons to obtain a high polymer precursor;
obtaining a catalyst-supporting carrier with electron conduction by carbonizing said high polymer precursor;
causing the catalyst-supporting carrier to support a catalyst; and
joining the carrier to a proton exchange layer.

16. The method according to claim 13 or 14, wherein each of said at least one selected from a group consisting of aliphatic hydrocarbons, aromatic hydrocarbons and derivatives of the aliphatic hydrocarbons and the aromatic hydrocarbons is at least one selected from a group consisting of polyacetylene, resorcinol, phenol, phenylphenol, polyaniline, polypyrrole, polythiophene, phenylphosphonic acid, phenylsilane alkoxide, pyrogallol, and dihydroxybiphenyl.

17. The method according to claim 13 or 14, wherein said proton conductor contains at least one selected from a group consisting of a phosphorus-containing compound, a sulfur-containing compound, carboxylic acid, boric acid, and inorganic solid-state acid.

18. The method according to claim 13 or 14, wherein the first step comprises heating the high molecular precursor or heating the high molecular precursor under a pressurized condition.

## Patentansprüche

1. Brennstoffzelle mit einer Reaktionsschicht, die aus einem katalysatortragenden Träger besteht, der einen Katalysator trägt und aus einer Verbindung ausgebildet ist, die einen aus einem anorganischen Material bestehenden Elektronenleiter und einen aus einem anorganischen Material bestehenden Protonenleiter verbindet.

2. Brennstoffzelle nach Anspruch 1, wobei der Elektronenleiter durch Verkohlen mindestens eines aus einer Gruppe ausgewählten Mitglieds erhalten wird, die aus aliphatischen Kohlenwasserstoffen, aromatischen Kohlenwasserstoffen und Abkömmlingen der aliphatischen Kohlenwasserstoffe und der aromatischen Kohlenwasserstoffe besteht.

3. Brennstoffzelle nach Anspruch 2, wobei jeder der aliphatischen Kohlenwasserstoffe, aromatischen Kohlenwasserstoffe und der Abkömmlinge der aliphatischen Kohlenwasserstoffe und der aromatischen Kohlenwasserstoffe mindestens ein aus einer Gruppe ausgewähltes Mitglied enthält, die aus Polyacetylen, Resorcin, Phenol, Phenylphenol, Polyanilin, Polypyrrol, Polythiophen, Phenylphosphonsäure, Phenylsilan-Alkoxid, Pyrogallol, und Dihydroxybiphenyl besteht.

4. Brennstoffzelle nach Anspruch 1, wobei der Elektronenleiter aus einem kohlenstoffhaltigen Material besteht.

5. Brennstoffzelle nach Anspruch 1, wobei der Protonenleiter mindestens ein aus einer Gruppe ausgewähltes Mitglied enthält, die aus einer phosphorhaltigen Verbindung, einer schwefelhaltigen Verbindung, Karbonsäure, Borsäure

und anorganischen Feststoffsäure besteht.

6. Brennstoffzelle nach Anspruch 1, wobei der Elektronenleiter aufeinander folgende Kohlenstoff-Kohlenstoff-Bindungen einschließlich einer Kohlenstoff-Kohlenstoff-Doppelbindung aufweist.

7. Brennstoffzelle nach einem der Ansprüche 1 bis 6, wobei der katalysatortragende Träger einen Edelmetallkatalysator trägt.

8. Brennstoffzelle, wobei ein Elektronenleiter, der aus einem anorganischen Material besteht, das durch Verkohlen eines organischen Materials erhalten wird, an einem Protonenleiter fixiert ist, der aus einem anorganischen Material besteht.

9. Brennstoffzelle nach Anspruch 8, wobei der Elektronenleiter am Protonenleiter durch eine kovalente Bindung fixiert ist.

10. Brennstoffzelle nach Anspruch 8, wobei der Elektronenleiter am Protonenleiter durch Einlagerung fixiert ist.

11. Brennstoffzelle nach Anspruch 8, wobei der Elektronenleiter am Protonenleiter durch Einschluss fixiert ist.

12. Brennstoffzelle nach Anspruch 5, wobei die Reaktionsschicht im Bereich von 100°C bis 200°C arbeitet.

13. Verfahren zum Herstellen einer Reaktionsschicht für eine Brennstoffzelle, mit:

    einem ersten Schritt zum Erhalten eines hochmolekularen Vorläufers durch Mischen und Polymerisieren mindestens eines aus einer Gruppe ausgewählten Mitglieds, die aus aliphatischen Kohlenwasserstoffen, aromatischen Kohlenwasserstoffen und Abkömmlingen der aliphatischen Kohlenwasserstoffe und der aromatischen Kohlenwasserstoffe besteht, mit einem protonenleitenden Material;
    einem zweiten Schritt zum Brennen des im ersten Schritt erhaltenen hochmolekularen Vorläufers;
    einem dritten Schritt zum Bewirken, dass das im zweiten Schritt erhaltene gebrannte Produkt einen Katalysator trägt, und zum Verbinden des gebrannten Produkts mit einer Protonenaustauschschicht.

14. Verfahren zum Herstellen einer Reaktionsschicht für eine Brennstoffzelle, mit:

    einem ersten Schritt zum Erhalten eines hochmolekularen Vorläufers durch Polymerisieren mindestens eines aus einer Gruppe ausgewählten Mitglieds, die aus aliphatischen Kohlenwasserstoffen, aromatischen Kohlenwasserstoffen und Abkömmlingen der aliphatischen Kohlenwasserstoffe und der aromatischen Kohlenwasserstoffe besteht, und Mischen eines protonenleitenden Materials in das mindestens eine Mitglied bei dessen Polymerisation;
    einem zweiten Schritt zum Brennen des im ersten Schritt erhaltenen Vorläufers;
    einem dritten Schritt zum Bewirken, dass das im zweiten Schritt erhaltene gebrannte Produkt einen Katalysator trägt, und zum Verbinden des gebrannten Produkts mit einer Protonenaustauschschicht.

15. Verfahren zum Herstellen einer Reaktionsschicht für eine Brennstoffzelle, mit den Schritten:

    Verbinden oder Mischen einer organischen Verbindung mit einer Verbindung, die bewegliche Protonen aufweist, um einen Hochpolymervorläufer zu erhalten;
    Erhalten eines katalysatortragenden Trägers mit Elektronenleitung durch Verkohlen des Hochpolymervorläufers;
    Bewirken, dass der katalysatortragende Träger einen Katalysator trägt; und
    Verbinden des Trägers mit einer Protonenaustauschschicht.

16. Verfahren nach Anspruch 13 oder 14, wobei jedes des mindestens einen aus einer Gruppe ausgewählten Mitglieds, die aus aliphatischen Kohlenwasserstoffen, aromatischen Kohlenwasserstoffen und Abkömmlingen der aliphatischen Kohlenwasserstoffe und der aromatischen Kohlenwasserstoffe besteht, mindestens ein aus einer Gruppe ausgewähltes Mitglied ist, die aus Polyacetylen, Resorcin, Phenol, Phenylphenol, Polyanilin, Polypyrrol, Polythiophen, Phenylphosphonsäure, Phenylsilan-Alkoxid, Pyrogallol und Dihydroxybiphenyl besteht.

17. Verfahren nach Anspruch 13 oder 14, wobei der Protonenleiter mindestens ein aus einer Gruppe ausgewähltes

Mitglied enthält, die aus einer phosphorhaltigen Verbindung, einer schwefelhaltigen Verbindung, Karbonsäure, Borsäure und anorganischen Feststoffsäure besteht.

18. Verfahren nach Anspruch 13 oder 14, wobei der erste Schritt das Erwärmen des hochmolekularen Vorläufers oder das Erwärmen des hochmolekularen Vorläufers unter einer Druckbedingung aufweist.

## Revendications

1. Pile à combustible comprenant une couche de réaction constituée d'un porteur de catalyseur, supportant un catalyseur, et formée d'un composite liant un conducteur d'électrons en matériau inorganique et un conducteur de protons matériau inorganique.

2. Pile à combustible selon la revendication 1, où le conducteur d'électrons est obtenu par carbonisation d'au moins un élément sélectionné dans un groupe composé d'hydrocarbures aliphatiques, d'hydrocarbures aromatiques et de dérivés des hydrocarbures aliphatiques et des hydrocarbures aromatiques.

3. Pile à combustible selon la revendication 2, où les hydrocarbures aliphatiques, les hydrocarbures aromatiques et les dérivés des hydrocarbures aliphatiques et des hydrocarbures aromatiques contiennent chacun au moins un élément sélectionné dans un groupe composé de polyacétylène, résorcine, phénol, phénylphénol, polyaniline, polypyrrol, polythiophène, acide phénylphosphonique, phénylsilane alkoxide, pyrogallol et dihydroxybiphényl.

4. Pile à combustible selon la revendication 1, où le conducteur d'électrons est en matériau carboné.

5. Pile à combustible selon la revendication 1, où le conducteur de protons contient au moins un élément sélectionné dans un groupe composé d'un composite contenant du phosphore, un composite contenant du soufre, de l'acide carboxylique, de l'acide borique, et un acide inorganique solide.

6. Pile à combustible selon la revendication 1, où le conducteur d'électrons présente des liaisons carbone-carbone consécutives, incluant une double liaison carbone-carbone.

7. Pile à combustible selon l'une des revendications 1 à 6, où le porteur de catalyseur supporte un catalyseur en métal noble.

8. Pile à combustible, où un conducteur d'électrons en matériau inorganique obtenu par carbonisation d'un matériau organique est fixé à un conducteur de protons en matériau inorganique.

9. Pile à combustible selon la revendication 8, où le conducteur d'électrons est fixé au conducteur de protons par une liaison covalente.

10. Pile à combustible selon la revendication 8, où le conducteur d'électrons est fixé au conducteur de protons par intercalation.

11. Pile à combustible selon la revendication 8, où le conducteur d'électrons est fixé au conducteur de protons par inclusion.

12. Pile à combustible selon la revendication 5, où la couche réactive est exécutée à 100 °C-200 °C.

13. Procédé de production d'une couche de réaction pour une pile à combustible, comprenant :

    une première étape d'obtention d'un précurseur hautement moléculaire par mélange et polymérisation d'au moins un élément sélectionné dans un groupe composé d'hydrocarbures aliphatiques, hydrocarbures aromatiques et dérivés des hydrocarbures aliphatiques et des hydrocarbures aromatiques avec un matériau conducteur de protons ;
    une deuxième étape de combustion du précurseur hautement moléculaire obtenu lors de la première étape ;
    une troisième étape de préparation du produit de combustion obtenu lors de la deuxième étape pour supporter un catalyseur et de liaison du produit de combustion à une couche d'échange de protons.

**14.** Procédé de production d'une couche de réaction pour une pile à combustible, comprenant :

une première étape d'obtention d'un précurseur hautement moléculaire par polymérisation d'au moins un élément sélectionné dans un groupe composé d'hydrocarbures aliphatiques,
hydrocarbures aromatiques et dérivés des hydrocarbures aliphatiques et des hydrocarbures aromatiques, et mélange d'un matériau conducteur de protons dans ledit ou lesdits éléments par polymérisation de celui-ci ;
une deuxième étape de combustion du précurseur obtenu lors de la première étape ;
une troisième étape de préparation du produit de combustion obtenu lors de la deuxième étape pour supporter un catalyseur et de liaison du produit de combustion à une couche d'échange de protons.

**15.** Procédé de production d'une couche de réaction pour une pile à combustible, comprenant les étapes
de liaison ou de mélange d'un composite organique avec un composite doté de protons mobiles pour obtenir un précurseur hautement polymère ;
d'obtention d'un porteur de catalyseur avec conduction d'électrons par carbonisation du précurseur hautement polymère ;
de préparation du porteur de catalyseur pour supporter un catalyseur ; et
de liaison du porteur à une couche d'échange de protons.

**16.** Procédé selon la revendication 13 ou la revendication 14, où le ou les éléments sélectionnés dans un groupe composé d'hydrocarbures aliphatiques, hydrocarbures aromatiques et dérivés des hydrocarbures aliphatiques et des hydrocarbures aromatiques contiennent chacun au moins un élément sélectionné dans un groupe composé de composé de polyacétylène, résorcine, phénol, phénylphénol, polyaniline, polypyrrol, polythiophène, acide phénylphosphonique, phénylsilane alkoxide, pyrogallol et dihydroxybiphényl.

**17.** Procédé selon la revendication 13 ou la revendication 14, où le conducteur de protons contient au moins un élément sélectionné dans un groupe composé d'un composite contenant du phosphore, un composite contenant du soufre, de l'acide carboxylique, de l'acide borique, et un acide inorganique solide.

**18.** Procédé selon la revendication 13 ou la revendication 14, où la première étape comprend le chauffage du précurseur hautement moléculaire ou le chauffage du précurseur hautement moléculaire dans un état sous pression.

FIG.1

A

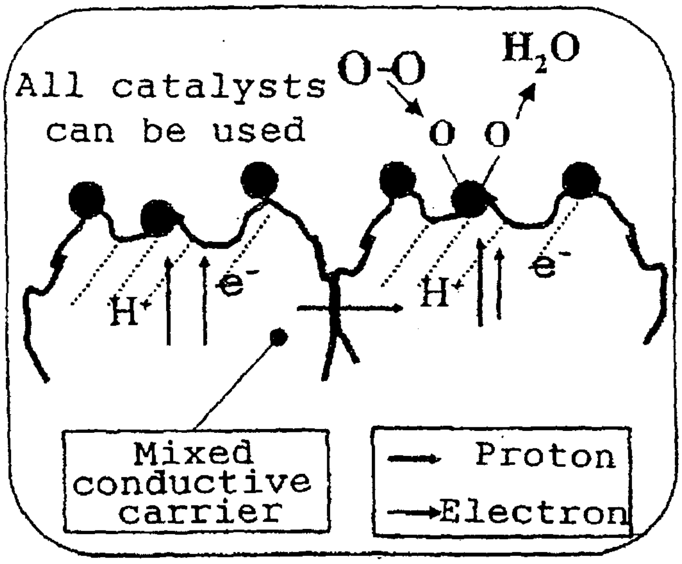
All catalysts can be used
O-O
$H_2O$
O O
$H^+$
$e^-$
$H^+$
$e^-$
Mixed conductive carrier
Proton
Electron

B

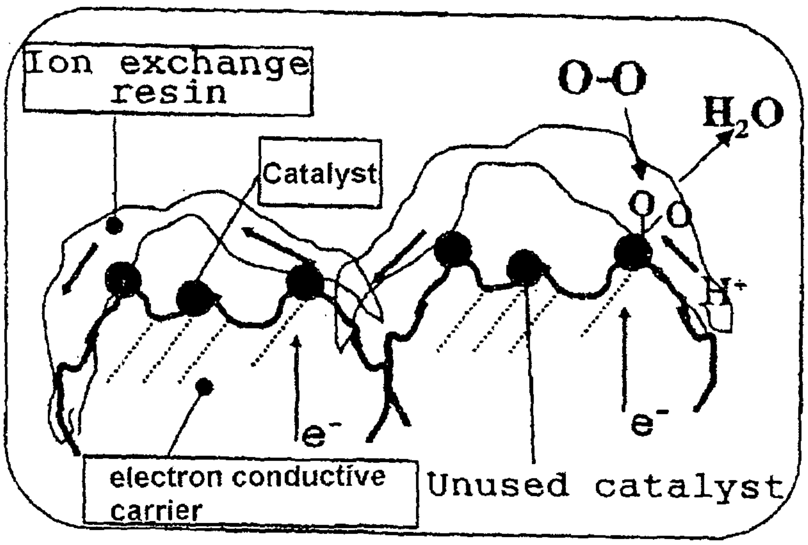
Ion exchange resin
O-O
$H_2O$
Catalyst
O O
$H^+$
$e^-$
$e^-$
electron conductive carrier
Unused catalyst

FIG.2

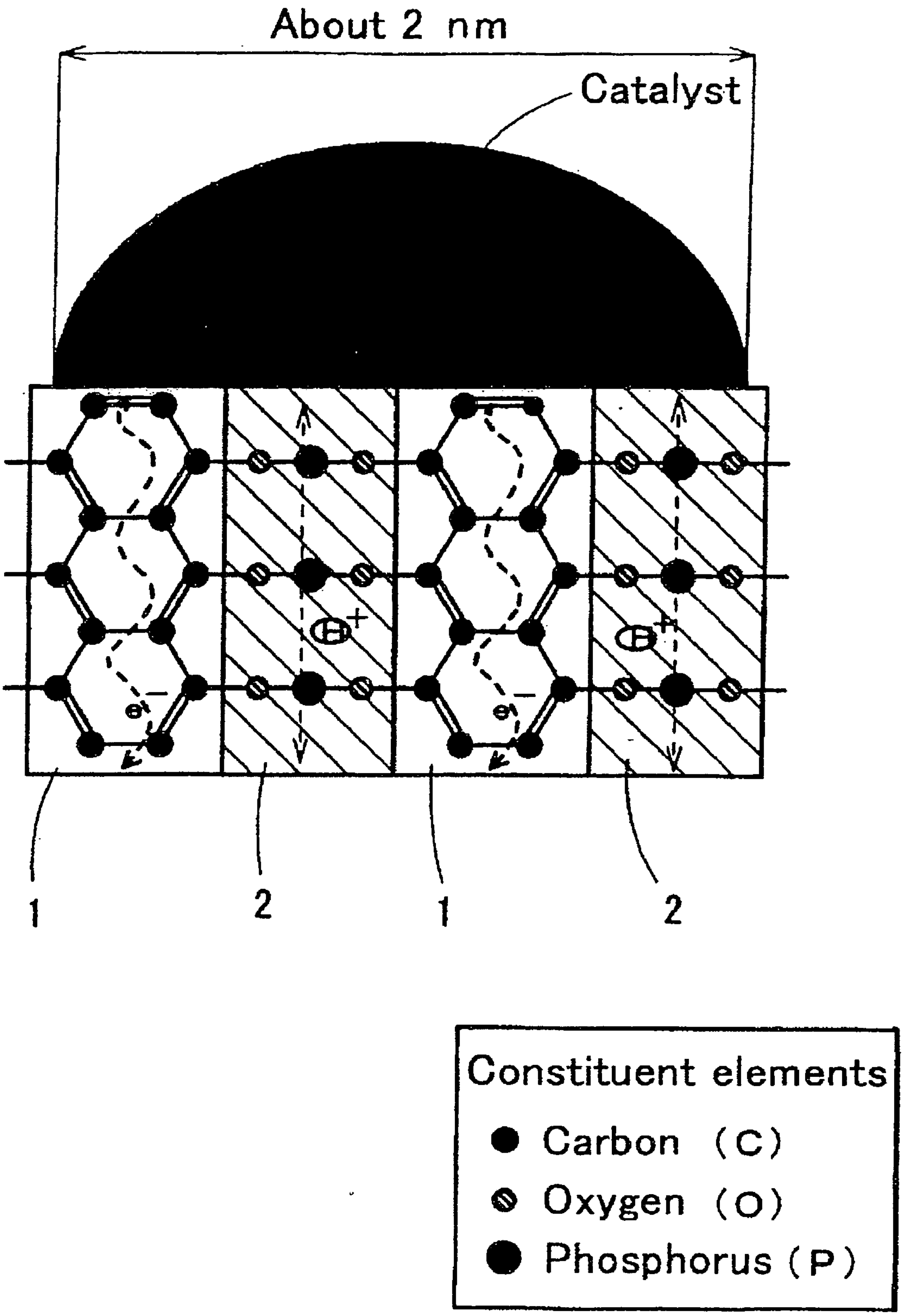
About 2 nm
Catalyst
1
2
1
2
Constituent elements
Carbon (C)
Oxygen (O)
Phosphorus (P)

FIG.3

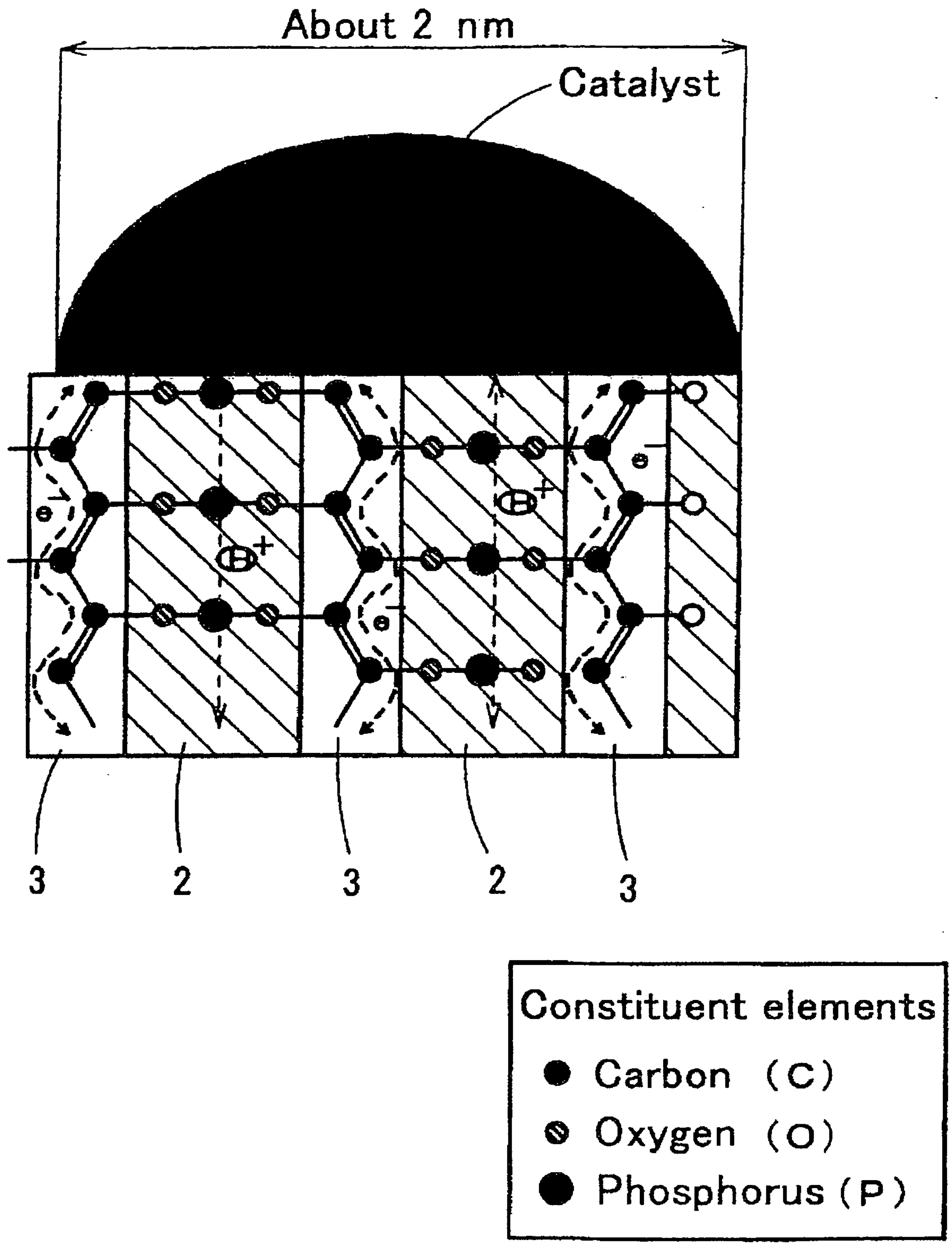
About 2 nm
Catalyst
3
2
3
2
3
Constituent elements
Carbon (C)
Oxygen (O)
Phosphorus (P)

FIG.4

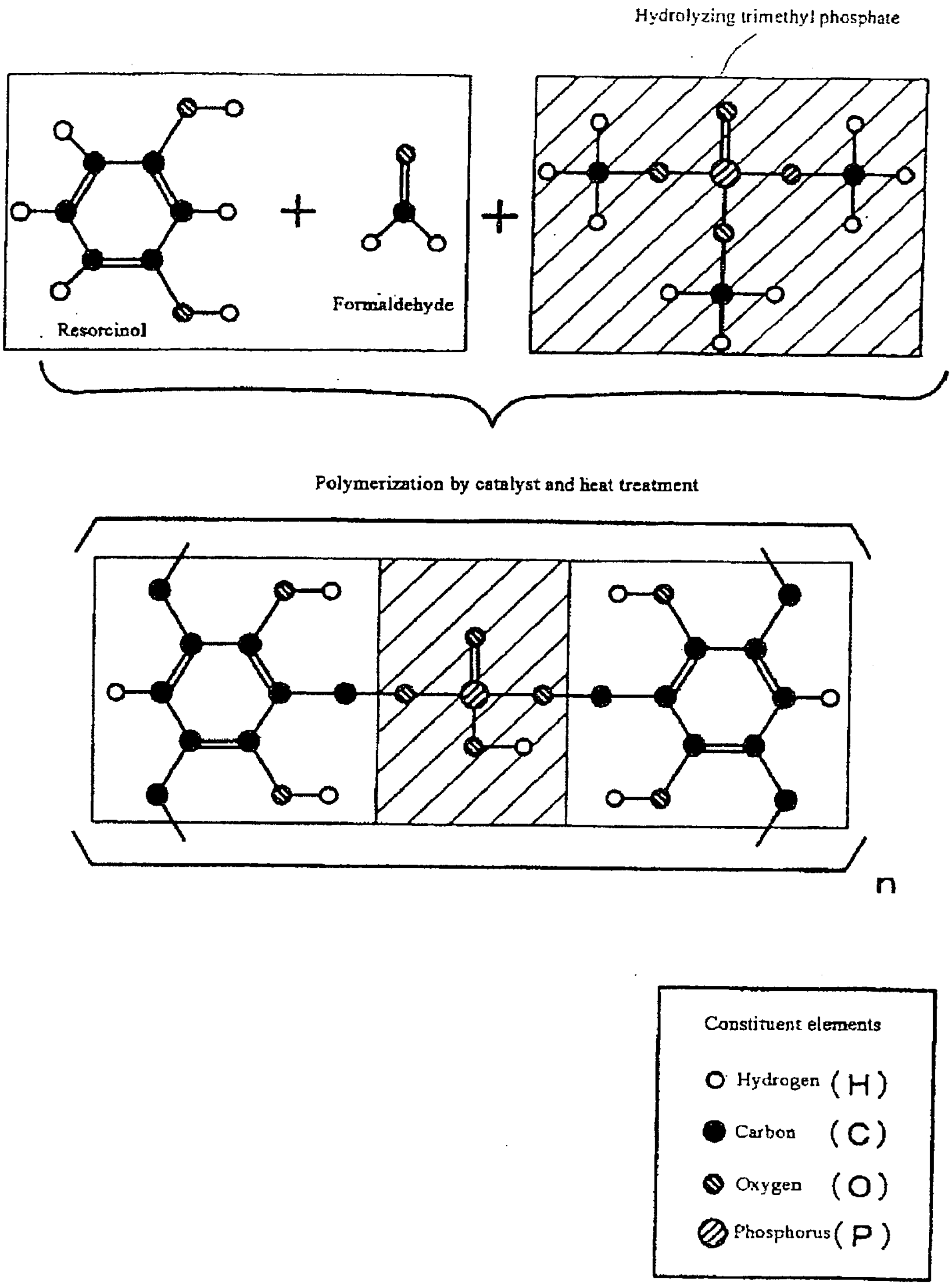
Hydrolyzing trimethyl phosphate
Resorcinol
Formaldehyde
Polymerization by catalyst and heat treatment
n
Constituent elements
Hydrogen (H)
Carbon (C)
Oxygen (O)
Phosphorus (P)

FIG.5

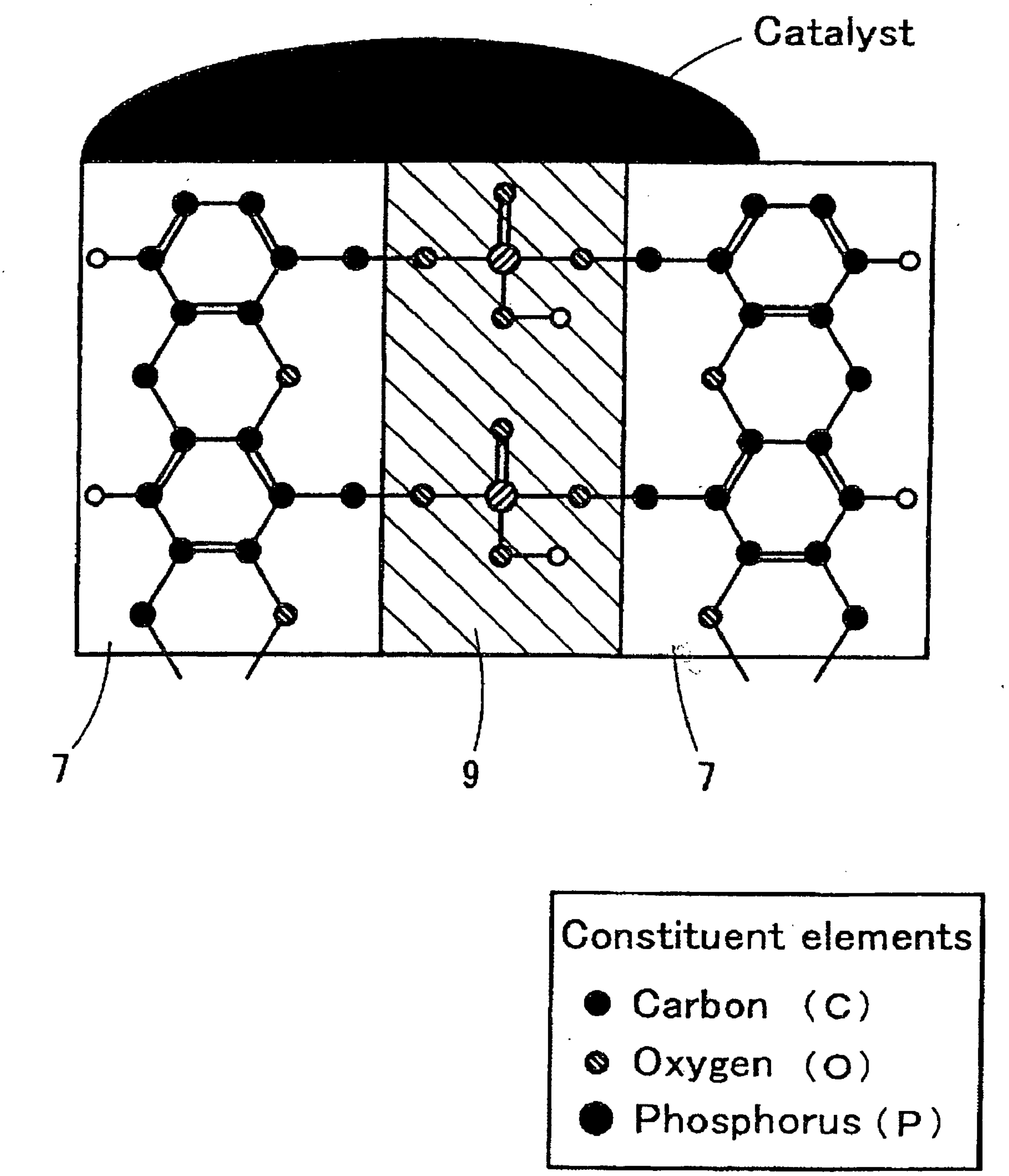
Catalyst
7
9
7
Constituent elements
Carbon (C)
Oxygen (O)
Phosphorus (P)

FIG.6

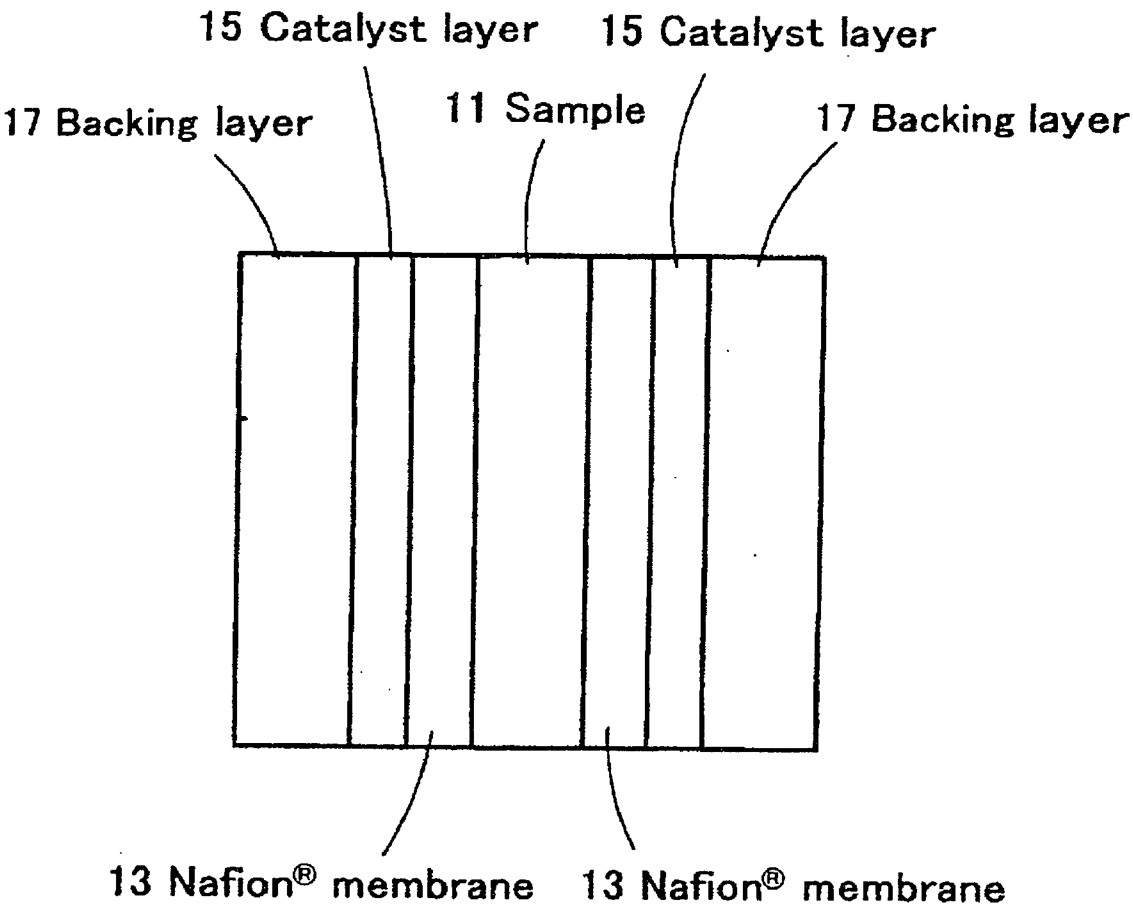
15 Catalyst layer
15 Catalyst layer
17 Backing layer
11 Sample
17 Backing layer
13 Nafion® membrane
13 Nafion® membrane

FIG.7

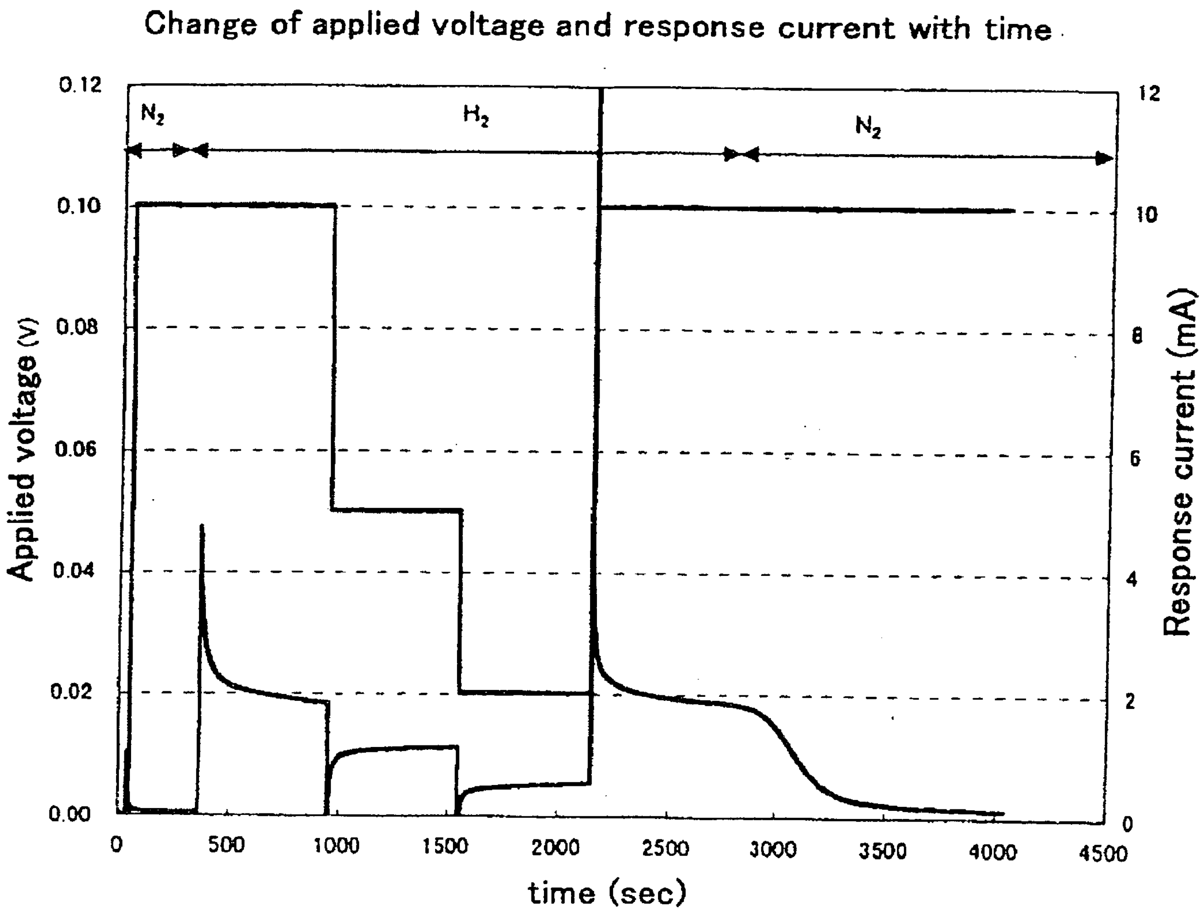
Change of applied voltage and response current with time
Applied voltage (V)
Response current (mA)
time (sec)
N2
H2
N2
0.12
0.10
0.08
0.06
0.04
0.02
0.00
12
10
8
6
4
2
0
0
500
1000
1500
2000
2500
3000
3500
4000
4500

FIG.8

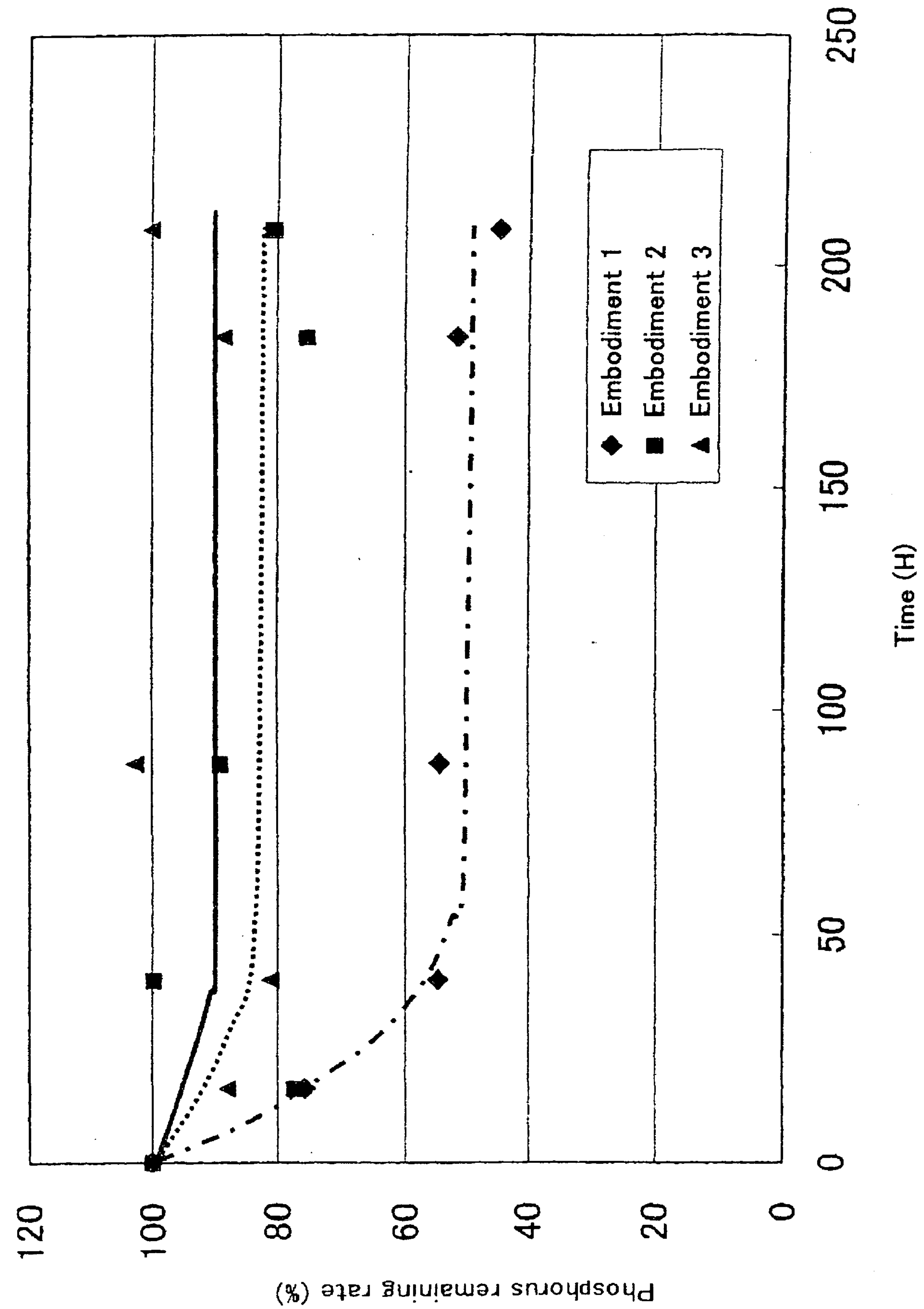
Phosphorus remaining rate (%)
120
100
80
60
40
20
0
0
50
100
150
200
250
Time (H)
Embodiment 1
Embodiment 2
Embodiment 3

FIG.9

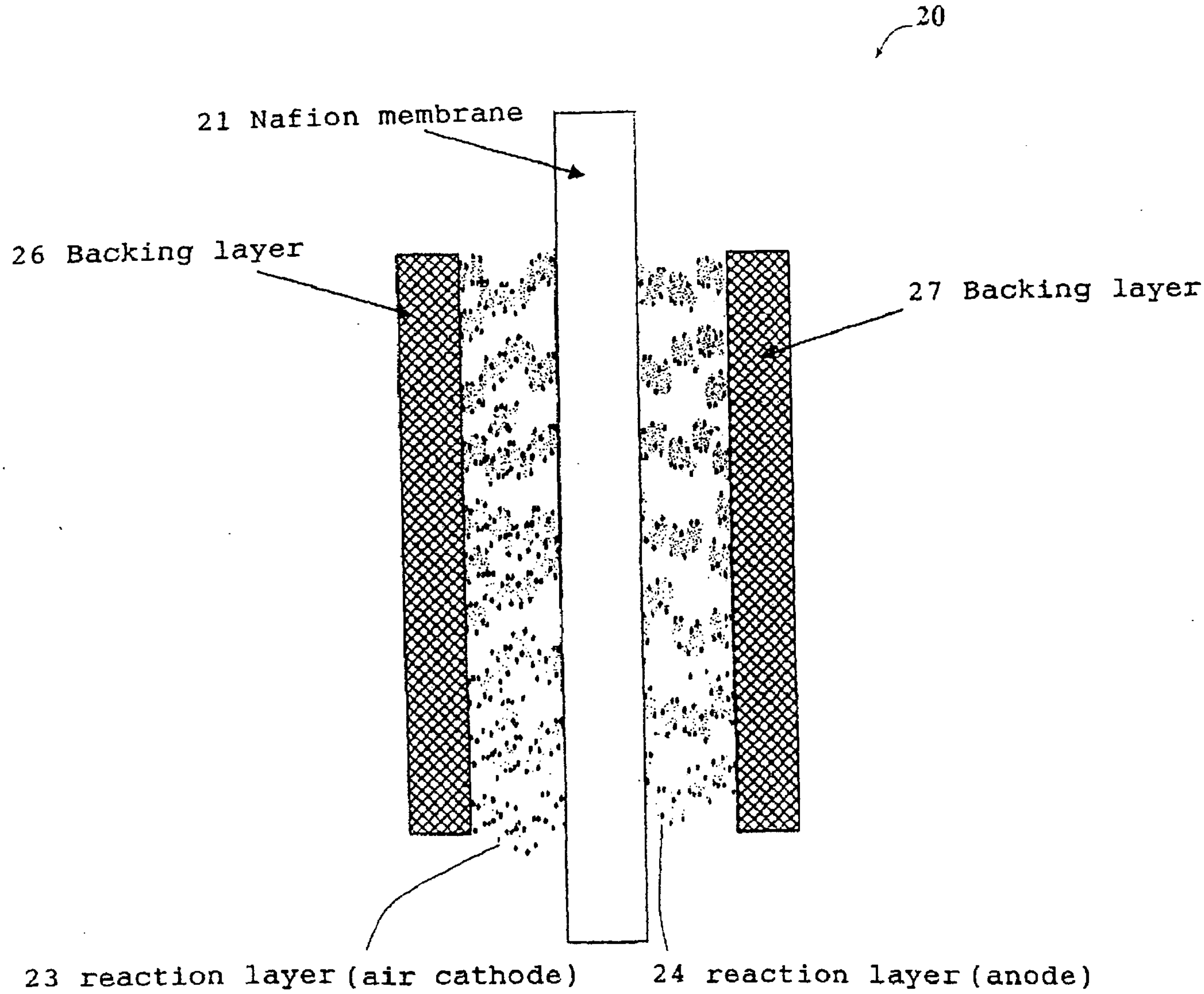
20
21 Nafion membrane
26 Backing layer
27 Backing layer
23 reaction layer (air cathode)
24 reaction layer (anode)

FIG.10

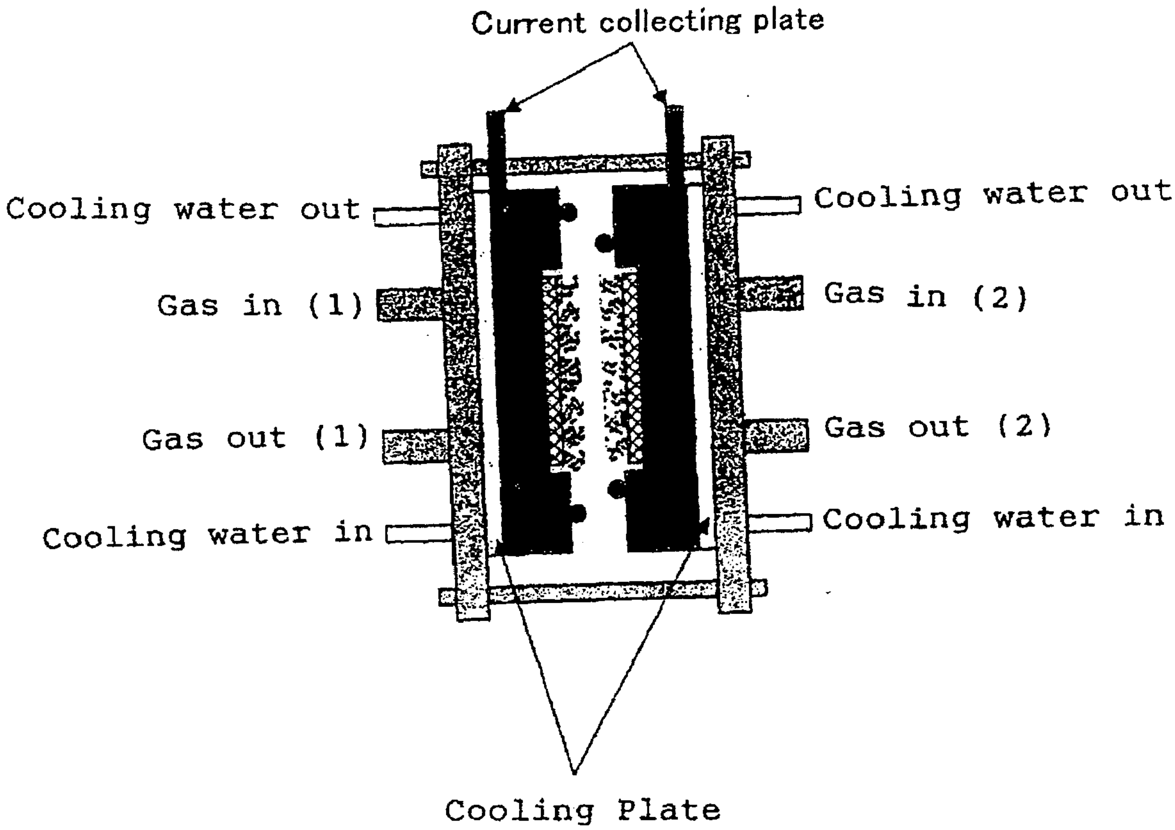
Current collecting plate
Cooling water out
Cooling water out
Gas in (1)
Gas in (2)
Gas out (1)
Gas out (2)
Cooling water in
Cooling water in
Cooling Plate

FIG.11

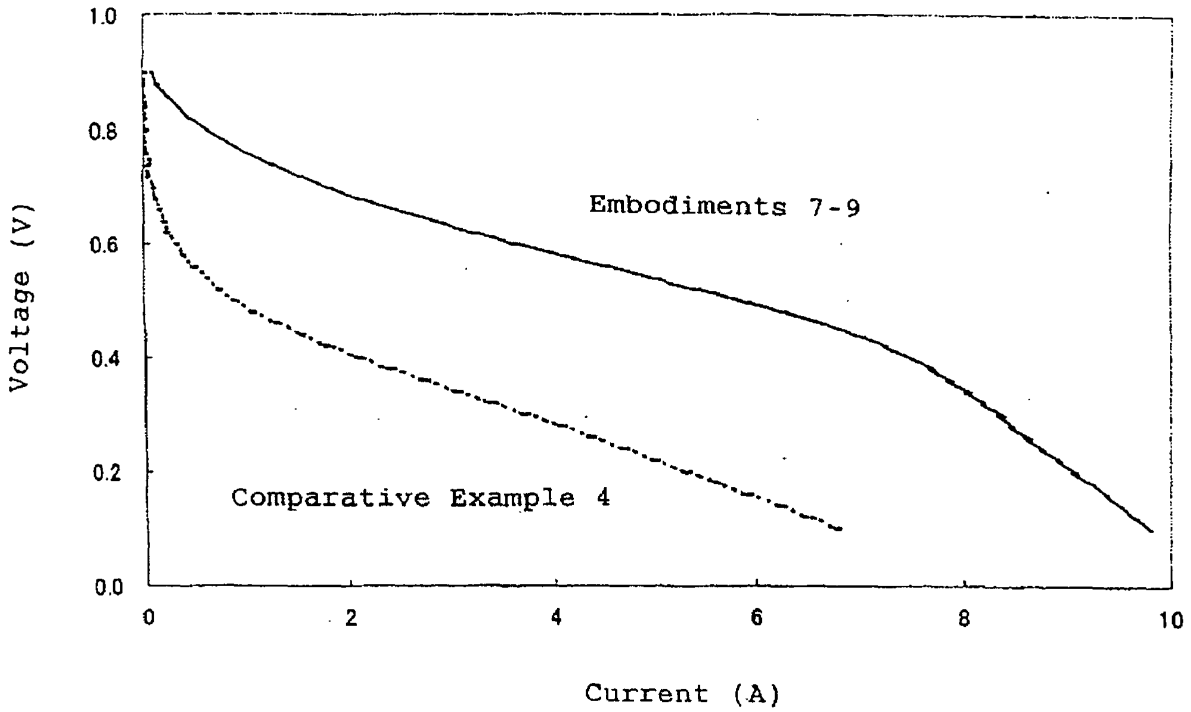
1.0
0.8
0.6
0.4
0.2
0.0
Voltage (V)
Embodiments 7-9
Comparative Example 4
0
2
4
6
8
10
Current (A)

FIG.12

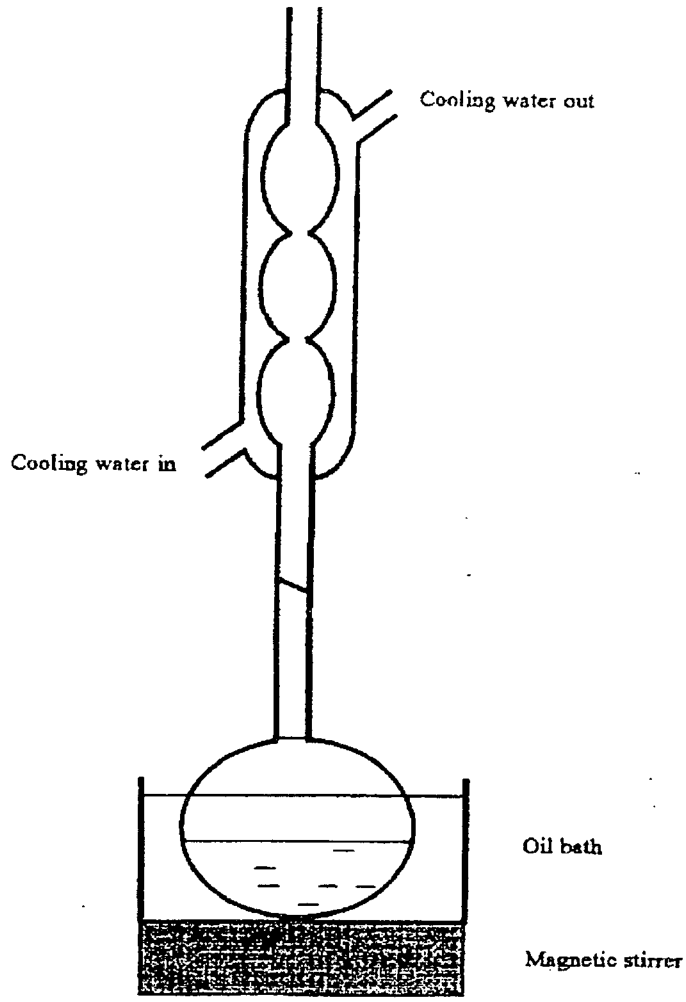
Cooling water out
Cooling water in
Oil bath
Magnetic stirrer

FIG.13

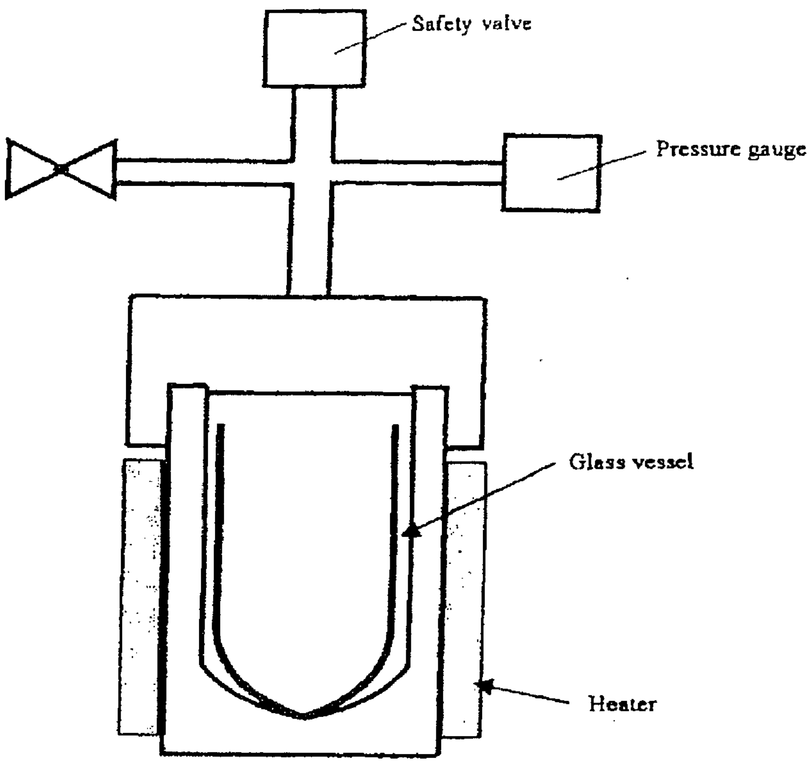

FIG.14

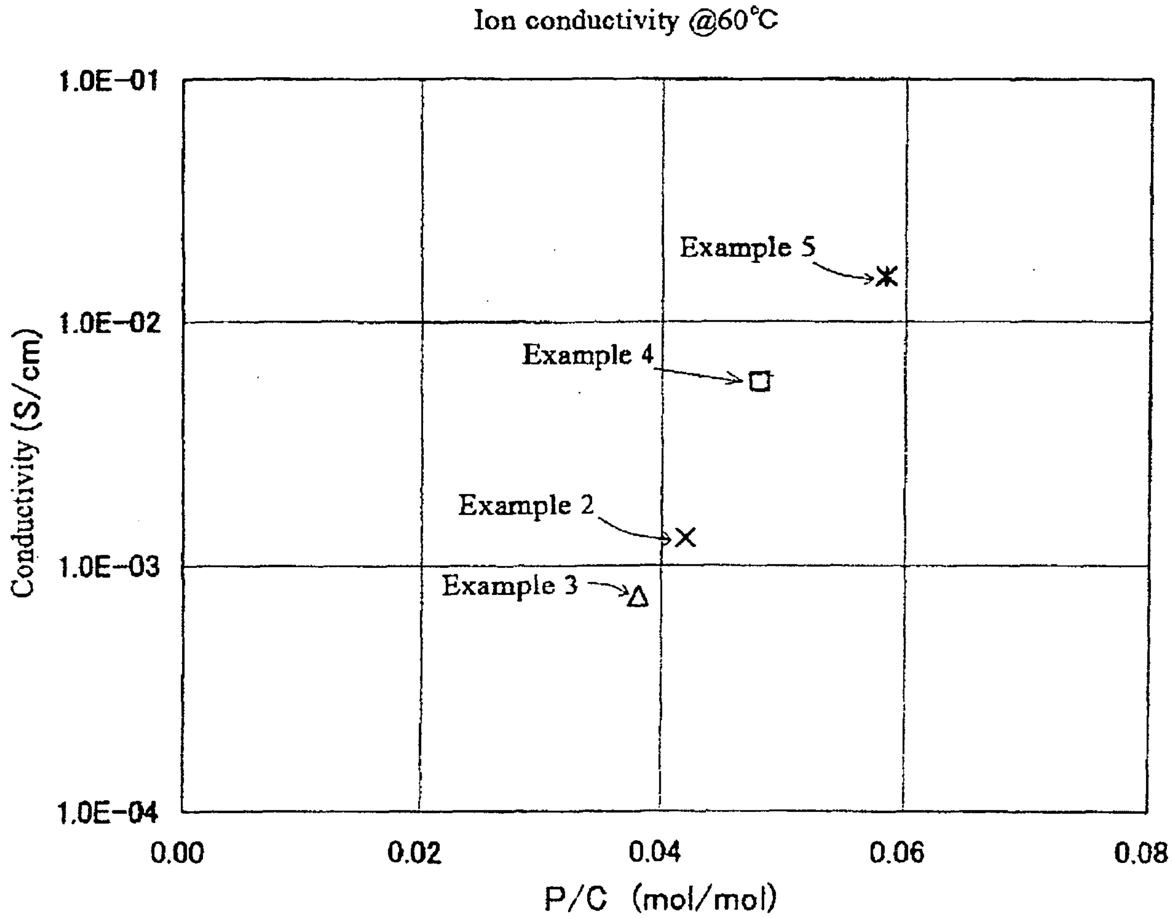
Ion conductivity @60°C
1.0E-01
1.0E-02
1.0E-03
1.0E-04
Conductivity (S/cm)
0.00
0.02
0.04
0.06
0.08
P/C (mol/mol)
Example 5
Example 4
Example 2
Example 3

FIG.15

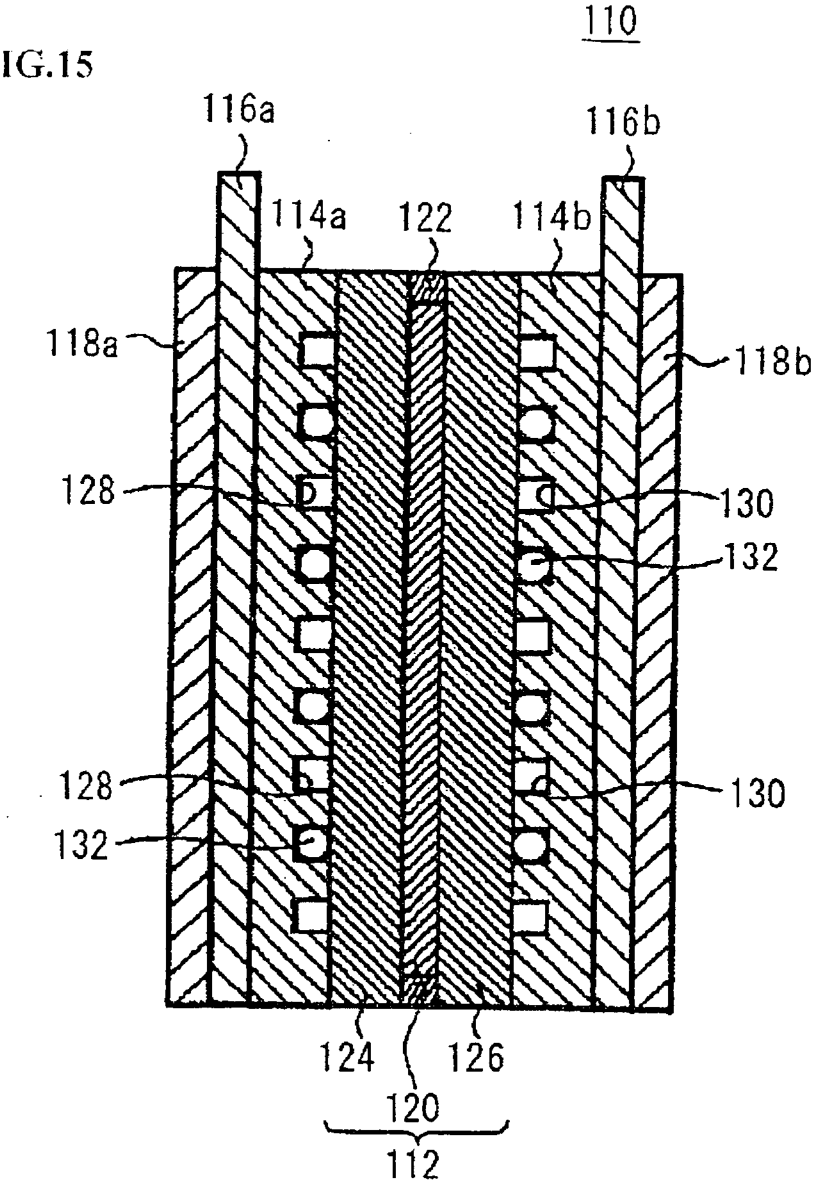
110
116a
116b
114a
122
114b
118a
118b
128
130
132
128
130
132
124
126
120
112

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001202971 A
- JP 2001110428 A
- JP 2003068321 A
- JP 2002536787 A
- JP 10255832 A
- JP 11335165 A
- JP 2000251533 A
- JP 2000018811 A
- US 2004115516 A1